# EUROPEAN PATENT APPLICATION

(11) **EP 3 276 196 A1**
(43) Date of publication of application: **31.01.2018**
(21) Application number: 16772037.4
(22) Date of filing: 29.02.2016
(51) Int. Cl.: F16C 33/78, F16C 33/64

(54) **VEHICLE WHEEL BEARING UNIT**

(30) Priority: 27.03.2015 JP 2015067389; 29.06.2015 JP 2015129866
(71) Applicant: NSK Ltd., Tokyo 141-8560 (JP)
(72) Inventor: WAKABAYASHI, Tatsuo, Fujisawa-shi Kanagawa 251-8501 (JP); TAKAYAMA, Akinobu, Fujisawa-shi Kanagawa 251-8501 (JP); NAGANO, Masato, Fujisawa-shi Kanagawa 251-8501 (JP); MAEDA, Yasuhiro, Fujisawa-shi Kanagawa 251-8501 (JP); SEKINO, Kazuo, Fujisawa-shi Kanagawa 251-8501 (JP)
(74) Representative: Luten, Martin Haaije
(86) International application number: PCT/JP2016/056086
(87) International publication number: WO 2016/158153

(57) **Abstract**

A seal device (17b) of a vehicle wheel-bearing unit (1) includes a leak prevention seal lip (41) and a scatter prevention seal lip (47), wherein a front end part of the leak prevention seal lip is in slidable contact with an axially inboard surface of a rotational-side flange (9a) in a state of having an interference throughout an entire circumference, and an axially middle part of the scatter prevention seal lip is provided at a radially more outer position than an indifferentiable part (22a) that is present between an axially inboard surface of a thick wall part (19a) and an axially inboard surface of a thin wall part and in a state where the axially middle part of the scatter prevention seal lip is radially overlapped with the indifferentiable part.

## Description

### TECHNICAL FIELD

The present invention relates to a vehicle wheel-bearing unit for supporting an automotive wheel to a suspension.

Priority is claimed on Japanese Patent Application No. 2015-067389 filed on March 27, 2015, and Japanese Patent Application No. 2015-129866 filed on June 29, 2015, the contents of which are incorporated herein by reference.

### BACKGROUND

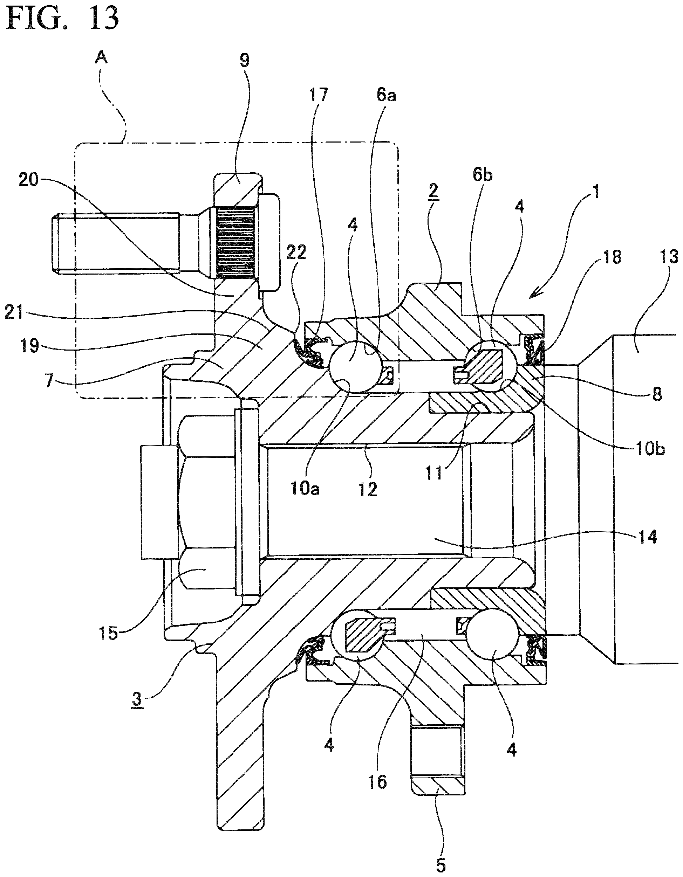

A wheel (not shown) that constitutes an automotive wheel and a rotor (not shown) that is a braking rotational member and that constitutes a disk brake as a brake device are described in, for example, Patent Document 1 and is rotatably supported by a knuckle (not shown) that constitutes a suspension by a wheel-supporting rolling bearing unit 1 shown in FIG. 13. The wheel-supporting rolling bearing unit 1 shown in FIG. 13 is a bearing unit in use for a driven wheel (rear wheels of a FR vehicle and a MR vehicle, a front wheel of a FF vehicle, and all wheels of a 4WD vehicle) and is formed such that a hub 3 is rotatably supported via a plurality of rolling elements 4 on an inner side of an outer ring 2.

A stationary-side flange 5 used for supporting and fixing to a suspension is provided on an outer circumferential surface of the outer ring 2. Double-row outer raceways 6a, 6b are provided on an inner circumferential surface of the outer ring 2.

The hub 3 is composed by a hub main body 7 and an inner ring 8. A rotational-side flange 9 is formed on a part, which protrudes from an axially outboard end opening of the outer ring 2, of an outer circumferential surface of the hub main body 7. A term "outboard" with respect to the axial direction refers to the left side of FIG. 13 which is the outer side in the vehicle width direction in a state where the components are assembled to the vehicle. Conversely, a term "inboard" with respect to the axial direction refers to the right side of FIG. 13 which is the center side in the vehicle width direction in a state where the components are assembled to the vehicle.

An inner raceway 10a that faces the outer raceway 6a on the axially outboard of the double-row outer raceways 6a, 6b is formed on an axially middle part of the outer circumferential surface of the hub main body 7. A small diameter step part 11a is formed on an axially inboard end part of the outer circumferential surface of the hub main body 7. A spline hole 12 is formed on an inner circumferential surface of the hub main body 7.

The inner ring 8 is a tubular member. An inner raceway 10b is formed on an outer circumferential surface of the inner ring 8. The inner ring 8 is externally fitted to the small diameter step part 11 of the hub main body 7. In this state, the inner raceway 10b faces the outer raceway 6b on the axially inboard side of the double-row outer raceways 6a, 6b.

The wheel-supporting rolling bearing unit 1 having a configuration as described above is assembled to a vehicle by inserting a spline shaft 14 that is provided to be fixed to an axially outboard end surface of a constant velocity joint outer race 13 into the spline hole 12 of the hub main body 7, screwing a nut 15 to a front end part of the spline shaft 14, and further tightening the nut 15. In this state, the axially outboard outer end surface of the constant velocity joint outer race 13 is in contact with an axially inboard end surface of the inner ring 8.

In the wheel-supporting rolling bearing unit 1 as described above, an axially outboard end opening part of axially both end opening parts of an internal space 16 that is present between the inner circumferential surface of the outer ring 2 and the outer circumferential surface of the hub 3 is sealed throughout the entire circumference by a seal ring 17. An axially inboard end opening part of the axially both end opening parts of the internal space 16 is sealed throughout the entire circumference by a combination seal ring 18. The seal ring 17 not only prevents a variety of foreign substances such as water and dust that are present outside from entering the inside but also prevents grease that is enveloped in the internal space 16 from leakage to the outside from the axially outboard end opening part of the internal space 16. When the grease is leaked from the axially outboard end opening part of the internal space 16, the grease may adhere to the rotor that constitutes the disk brake.

### [Related Art Documents]

### [Patent Documents]

[Patent Document 1] Japanese Unexamined Patent Application, First Publication No. 2006-118626

### SUMMARY OF INVENTION

### PROBLEMS TO BE SOLVED BY THE INVENTION

An object of an aspect of the present invention is to realize a structure that can prevent grease from leakage from a seal device (seal ring) which seals an axially outboard end opening part of a space in which a rolling element is arranged and adhering to a rotor which constitutes a disk brake.

### MEANS FOR SOLVING THE PROBLEM

An aspect of the present invention is a vehicle wheel-bearing unit that includes: an outer ring that has outer raceways on an inner circumferential surface; a hub which has inner raceways on an outer circumferential surface, which is arranged on an inner side of the outer ring concentrically with the outer ring, and on which a rotational-side flange used for supporting a wheel is formed at a part, which protrudes axially more outward than an axially outboard end part of the outer ring, of the outer circumferential surface; a plurality of rolling elements that are provided to be capable of rolling between the outer raceways and the inner raceways; and a seal device that seals an axially outboard end opening part of an internal space that is present between the inner circumferential surface of the outer ring and the outer circumferential surface of the hub in a state where the seal device is supported by and fixed to an axially outboard end part of the outer ring, wherein: the rotational-side flange has a thick wall part that is formed on a radially inner side and a thin wall part that is formed on a radially more outer side than the thick wall part, and an axially inboard surface of the thick wall part is arranged at an axially more inboard position than an axially inboard surface of the thin wall part; the seal device includes, as a separate or identical seal lip, a leak prevention seal lip for preventing grease which is enveloped in the internal space from being leaked from the internal space and a scatter prevention seal lip for preventing grease which is enveloped in the internal space from being scattered to an external space; a front end part of the leak prevention seal lip is in slidable contact with an axially inboard surface of the rotational-side flange in a state of having an interference throughout an entire circumference; and an axially middle part of the scatter prevention seal lip is provided at a radially more outer position than an indifferentiable part that is present between the axially inboard surface of the thick wall part and the axially inboard surface of the thin wall part and in a state where the axially middle part of the scatter prevention seal lip is radially overlapped with the indifferentiable part.

A vehicle wheel-bearing unit according to another aspect of the present invention includes: an outer ring having outer raceways; a hub having inner raceways and a flange; a plurality of rolling elements that are arranged between the outer raceways and the inner raceways; and a seal device, wherein the flange has a ridge part that is provided such that grease is scattered from the ridge part by a centrifugal force in a use state, and the seal device has a first seal lip that seals an opening part of a space between the outer ring and the hub and a second seal lip in which at least part of the second seal lip is arranged at a radially more outer position than the ridge part and at least part of the second seal lip is arranged to be radially overlapped with the ridge part.

A vehicle wheel-bearing unit according to another aspect of the present invention includes: an outer ring having outer raceways; a hub having inner raceways and a flange; a plurality of rolling elements that are arranged between the outer raceways and the inner raceways; and a seal device, wherein the flange has a first part, a second part that is arranged at a radially more outer position than the first part, and a ridge part that is arranged between the first part and the second part, the seal device has a first seal lip that seals an opening part of a space between the outer ring and the hub and a second seal lip in which at least part of the second seal lip is arranged at a radially more outer position than the ridge part and at least part of the second seal lip is arranged to be radially overlapped with the ridge part, and the second seal lip has at least one of (a) an inner circumferential surface that is arranged between a front end part and an overlapping position that axially overlaps with the ridge part and that is substantially parallel with the axial direction, (b) an inner circumferential surface that is arranged between a front end part and an overlapping position that axially overlaps with the ridge part and that is arranged radially more inside at a farther position from the outer ring, and (c) a front end part that is in slidable contact with the second part of the hub.

### BRIEF DESCRIPTION OF THE DRAWINGS

FIG. 1 is a view showing a wheel-bearing unit of a first embodiment of the present invention and is an enlarged view of a part that corresponds to an A portion of FIG. 13.
FIG. 2 is a view showing the wheel-bearing unit of the first embodiment and is an enlarged view of a B portion of FIG. 1.
FIG. 3 is a view showing a wheel-bearing unit of a second embodiment and is a view showing a part that corresponds to FIG. 1.
FIG. 4 is a view showing the wheel-bearing unit of the second embodiment and is a view showing a part that corresponds to FIG. 2.
FIG. 5 is a view showing a wheel-bearing unit of a third embodiment and is a view showing a part that corresponds to FIG. 1.
FIG. 6 is a view showing the wheel-bearing unit of the third embodiment and is a view showing a part that corresponds to FIG. 2.
FIG. 7 is a view showing a wheel-bearing unit of a fourth embodiment and is a view showing a part that corresponds to FIG. 1.
FIG. 8 is a view showing the wheel-bearing unit of the fourth embodiment and is a view showing a part that corresponds to FIG. 2.
FIG. 9 is a view showing a wheel-bearing unit of a fifth embodiment and is a view showing a part that corresponds to FIG. 1.
FIG. 10 is a view showing the wheel-bearing unit of the fifth embodiment and is a view showing a part that corresponds to FIG. 2.
FIG. 11 is a view showing a wheel-bearing unit of a sixth embodiment and is a view showing a part that corresponds to FIG. 2.
FIG. 12 is a view showing a wheel-bearing unit of a seventh embodiment and is a view showing a part that corresponds to FIG. 2.
FIG. 13 is a cross-sectional view showing an example of a structure of the related art.
FIG. 14 is a view showing a test sample of Example.
FIG. 15A is a view showing a test result of Example.
FIG. 15B is a view showing a test result of Example.

### DESCRIPTION OF THE EMBODIMENTS

Hereinafter, embodiments of the present invention will be described with reference to the drawings.

In a case of the structure of the related art shown in FIG. 13, the rotational-side flange 9 is formed of a thick wall part (first part) 19 that is provided on a radially inner side, a thin wall part (second part) 20 that is provided at a radially more outer position than the thick wall part 19, and a continuation part 21 that radially continuously connects the thick wall part 19 and the thin wall part 20. An indifferentiable edge part (ridge part) 22 is present at a part that continuously connects a radially outer end edge of an axially inboard surface of the thick wall part 19 and a radially inner end edge of an axially inboard surface of the continuation part 21. An indifferentiable part refers to a part which is a connection part between a first curve and a second curve and at which a differential coefficient on the first curve side of the connection part is discontinuous to (different from) a differential coefficient on the second curve side of the connection part.

The following embodiments are based on a novel finding that, when such an edge part 22 is present, in a case where grease is leaked from the axially outboard end opening part of the internal space 16, the grease may move along the axially inboard surface of the thick wall part 19 by a centrifugal force and may be scattered at the edge part 22 so as to be separated (shaken out) from the axially inboard surface of the thick wall part 19.

### [First Embodiment]

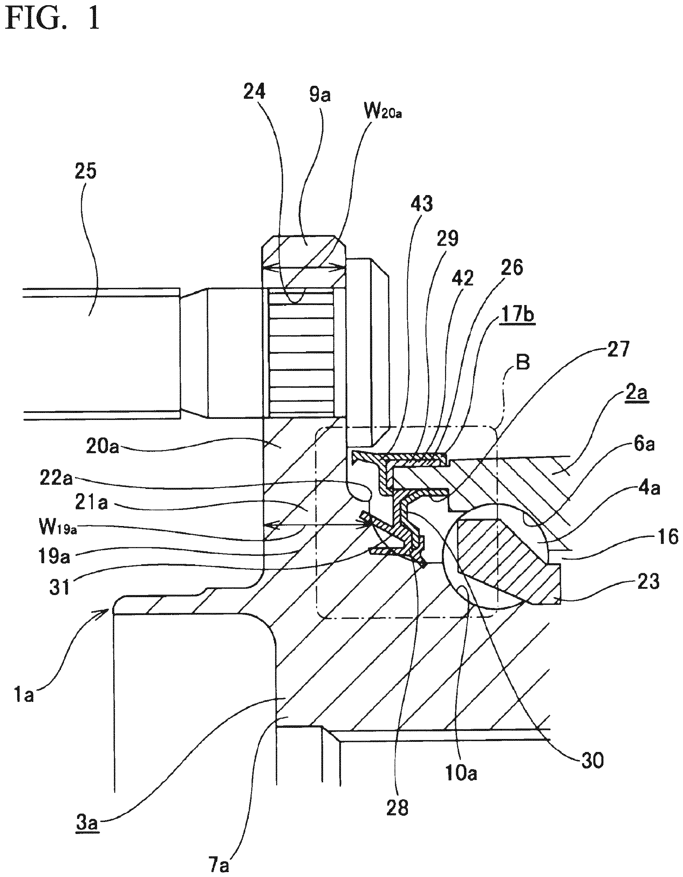

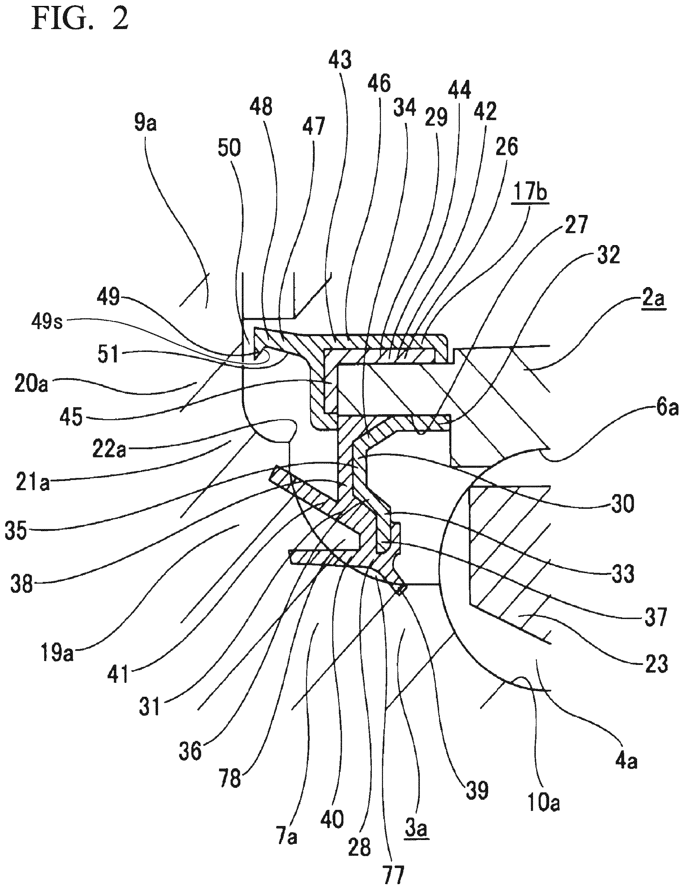

A first embodiment of the present invention is described with reference to FIGS. 1 and 2. A wheel-supporting rolling bearing unit 1a (vehicle wheel-bearing unit) of the first embodiment is used for a driven wheel and includes an outer ring 2a that is formed by hot forging, a hub 3a that is arranged on a radially inner side of the outer ring 2a, and a plurality of rolling elements 4a for rotatably supporting the hub 3a by the outer ring 2a. Each of the rolling elements 4a is arranged to be capable of rolling between double-row outer raceways 6a, 6b (with respect to the outer raceway 6b, refer to FIG. 13) that are formed on an inner circumferential surface of the outer ring 2a and double-row inner raceways 10a, 10b (with respect to the inner raceway 10b, refer to FIG. 13) that are formed on an outer circumferential surface of the hub 3a in a state of being held by a retainer 23 for each row. In a case of the wheel-supporting rolling bearing unit 1a of the first embodiment, a ball is used as each of the rolling elements 4a; however, in a case of a wheel-supporting rolling bearing unit used for a heavy vehicle, a tapered roller may also be used as the rolling element. Further, the wheel-supporting rolling bearing unit 1a of the first embodiment is also applicable to a wheel-supporting rolling bearing unit for a non-driven wheel in which the hub is solid. The basic structure of the wheel-supporting rolling bearing unit 1a as described above is substantially similar to the structure of the related art shown in FIG. 13. Hereinafter, a characterizing part of the present invention is described.

In the wheel-supporting rolling bearing unit 1a of the first embodiment, a rotational-side flange 9a is formed on a portion that is part of an outer circumferential surface of a hub main body 7a which constitutes the hub 3a and that protrudes from an axially outboard end opening of the outer ring 2a. In the case of the first embodiment, the rotational-side flange 9a is formed of a thick wall part (first part) 19a that is provided to a base end portion from a portion close to the base end, a thin wall part (second part) 20a that is provided at a radially more outer position than the thick wall part 19a, and a continuation part 21a that radially continuously connects the thick wall part 19a and the thin wall part 20a.

The thick wall part 19a is formed such that an axially outboard surface has a flat surface shape in which the position with respect to the axial direction is unchanged throughout the entire length in the radial direction. An axially inboard surface of the thick wall part 19a is formed in a dent curved surface shape that is slanted in a curved manner in the axially more inboard toward the radially more inside. Accordingly, such a thickness W₁₉ₐ with respect to the axial direction of the thick wall part 19a is changed so as to be greater toward the radially more inside. In the case of the first embodiment, the shape (cross-sectional shape) of the thick wall part 19a as described above is the same shape throughout the entire circumference of the rotational-side flange 9a.

The thin wall part 20a includes a plurality of regions in the circumferential direction at which a through-hole 24 that penetrates each of the plurality of regions in the axial direction is provided. A stud 25 is pressed into and fixed to the inside of each through-hole 24, and thereby, a rotor (not shown) that constitutes a disk brake and a wheel (not shown) that constitutes a vehicle wheel can be supported by and be fixed to the rotational-side flange 9a. An axially outboard surface of the thin wall part 20a except a chamfered part that is formed on a radially outer end part is formed in a flat surface shape in which the position with respect to the axial direction is unchanged throughout the entire length in the radial direction and the entire circumference in the circumferential direction. The axially outboard surface of the thin wall part 20a, the axially outboard surface of the thick wall part 19a, and an axially outboard surface of the continuation part 21a described below are positioned on the same plane. Further, in the case of the first embodiment, an axially inboard surface of the thin wall part 20a except a chamfered part that is formed on a radially outer end part is formed in a flat surface shape in which the position with respect to the axial direction is unchanged throughout the entire length in the radial direction and the entire circumference in the circumferential direction. Accordingly, such a thickness W₂₀ₐ with respect to the axial direction of the thin wall part 20a is constant throughout the entire length in the radial direction and the entire circumference in the circumferential direction except the radially outer end part. The axially inboard surface of the thin wall part 20a is arranged at an axially more outboard position than the axially inboard surface of the thick wall part 19a. As described above, in the case of the first embodiment, the thickness W₂₀ₐ with respect to the axial direction of the thin wall part 20a is formed to be constant throughout the entire circumference with respect to the circumferential direction of the thin wall part 20a. The first embodiment can be applied to a structure in which the thickness W₂₀ₐ with respect to the axial direction of the thin wall part 20a is different between a peripheral portion of a part in which the stud 25 as shown in FIG. 1 is pressed to be fixed (at which the through-hole 24 is formed) and a portion (not shown) between the peripheral portions with respect to the circumferential direction. Specifically, the thickness W₂₀ₐ with respect to the axial direction of each peripheral portion is made to be greater than the thickness with respect to the axial direction of the portion between the peripheral portions with respect to the circumferential direction, and thereby, the first embodiment can be applied to a structure (so-called scallop flange) in which the rotational-side flange 9a is made lightweight.

The thick wall part 19a continues to the thin wall part 20a in the radial direction by the continuation part 21a. An axially outboard surface of such a continuation part 21a is formed in a flat surface shape in which the position with respect to the axial direction is unchanged throughout the entire length in the radial direction. On the other hand, an axially inboard surface of the continuation part 21a is formed in a dent curved surface shape that is slanted in a curved manner in the more axially inboard toward the more radially inside direction. A radially outer end edge of the axially inboard surface of such a continuation part 21a smoothly continues to a radially inner end edge of the axially inboard surface of the thin wall part 20a. On the other hand, a radially inner end edge of the axially inboard surface of the continuation part 21a continues to a radially outer end edge of the axially inboard surface of the thick wall part 19a by an edge part (ridge part) 22a which is an indifferentiable part. The indifferentiable part refers to a part which is a connection part between a first curve and a second curve and at which a differential coefficient on the first curve side of the connection part is discontinuous to (different from) a differential coefficient on the second curve side of the connection part. In the first embodiment, the edge part 22a is a connection part between the axially inboard surface (first curve) of the continuation part 21a and the axially inboard surface (second curve) of the thick wall part 19a. Further, the differential coefficient at the radially inner end edge (on the first curve side of the edge part 22a) of the axially inboard surface (first curve) of the continuation part 21a is discontinuous to (different from) the differential coefficient at the radially outer end edge (on the second curve side of the edge part 22a) of the axially inboard surface (second curve) of the thick wall part 19a. Therefore, the edge part 22a is the indifferentiable part. In the case of the present example, the edge part 22a is arranged at an axially more outboard position than the axially outboard surface of the outer ring 2a. Further, the edge part 22a is arranged at a radially more inside position than the inner circumferential surface of the axially outboard end part of the outer ring 2a.

In the case of the first embodiment, the shape (cross-sectional shape) of the continuation part 21a as described above is the same shape throughout the entire circumference of the rotational-side flange 9a. A part which is adjacent to the edge part 22a of the axially inboard surface of the continuation part 21a can be formed in a cylindrical surface shape or a slanted surface shape (partially conical surface shape, spherical surface shape) that is slightly slanted in the radially more outside toward the more axially inboard direction. Thereby, it is possible to enhance a shaking out effect of grease described below.

In the wheel-supporting rolling bearing unit 1a of the first embodiment, an outside circumferential-direction step part 26 that is concaved radially inward throughout the entire circumference is formed to the axially outboard end part from a part close to the axially outboard end of the outer circumferential surface of the outer ring 2a. An inside circumferential-direction step part 27 that is concaved radially outward throughout the entire circumference is formed on a part, which is matched with respect to the axial direction to (is radially overlapped with) the outside circumferential-direction step part 26, of the inner circumferential surface of the outer ring 2a.

The wheel-supporting rolling bearing unit 1a of the first embodiment includes a seal device 17b for sealing an axially outboard end opening part of an internal space 16 which has a substantially cylindrical shape, which is present between the inner circumferential surface of the outer ring 2a and the outer circumferential surface of the hub 3a, and in which the rolling elements 4a are arranged. Grease is encapsulated in the internal space 16.

The seal device 17b is composed by an inside seal ring 28 and an outside seal ring 29 that is provided as a different body from the inside seal ring 28.

The inside seal ring 28 is formed of a metal insert 30 and a seal material 31.

The metal insert 30 is formed by bending a metal plate such as a soft steel plate. The metal insert 30 is formed of a fitting cylinder part 32 and a circular ring-shaped part 33 that is formed in a state of being bent radially inward from the axially outboard end edge of the fitting cylinder part 32.

The fitting cylinder part 32 is formed in a cylindrical shape in which the outer diameter and the inner diameter are unchanged throughout the entire length in the axial direction.

The circular ring-shaped part 33 is formed of an outside conical cylinder part 34, an outside circular ring part 35, an inside conical cylinder part 36, and an inside circular ring part 37.

The outside conical cylinder part 34 is formed in a state of being bent (slanted) axially outward and radially inward from the axially outboard end edge of the fitting cylinder part 32.

The outside circular ring part 35 is formed in a state of being bent radially inward from the radially inner end edge (axially outboard end edge) of the outside conical cylinder part 34.

The inside conical cylinder part 36 is formed in a state of being bent (slanted) axially inward and radially inward from the radially inner end edge of the outside circular ring part 35.

The inside circular ring part 37 is formed in a state of being bent radially inward from the radially inner end edge (axially inboard end edge) of the inside conical cylinder part 36.

The outer circumferential surface of the fitting cylinder part 32 of the metal insert 30 having such a configuration is internally fitted and fixed to the inside circumferential-direction step part 27 of the outer ring 2a.

The seal material 31 is made of an elastic material such as an elastomer like a rubber. The seal material 31 is adhered and fixed to the metal insert 30. The seal material 31 includes a seal base part 38 and three contact seal lips (an inside seal lip 39, a middle seal lip 40, and an outside seal lip 41). FIGS. 1 and 2 show a shape in a free state of each seal lip (the inside seal lip 39, the middle seal lip 40, and the outside seal lip 41).

The seal base part 38 has a substantially circular ring shape. The seal base part 38 is adhered and fixed to the metal insert 30 in a state of covering a part from the axially outboard surface (outer circumferential surface of the outside conical cylinder part 34) of the circular ring-shaped part 33 of the metal insert 30 via the inner circumferential surface of the circular ring-shaped part 33 to the radially inner end part of the axially inboard surface of the metal insert 30 (inside circular ring part 37).

The inside seal lip 39 is formed in a state of extending to be slanted axially inward and radially inward from a part, which covers the inner circumferential surface of the circular ring-shaped part 33 (inside circular ring part 37) of the metal insert 30, of the seal base part 38. A front end edge of the inside seal lip 39 is in contact with (in slidable contact with) the outer circumferential surface of the hub main body 7a at a position adjacent to the axially inboard side of the base end part of the rotational-side flange 9a in a state of having an interference throughout the entire circumference.

The middle seal lip 40 is formed in a state of extending axially outward from the radially inner end part of the axially outboard surface of the seal base part 38. A front end edge of the middle seal lip 40 is in contact with (in slidable contact with) the radially inner end part of the axially inboard surface of the thick wall part 19a that constitutes the rotational-side flange 9a in a state of having an interference throughout the entire circumference.

The outside seal lip 41 is a member that corresponds to a seal lip (leak prevention seal lip) which includes a leak prevention function. The outside seal lip 41 is formed in a state of extending to be slanted axially outward and radially outward from a radially outer end portion of a part, which covers the inner circumferential surface of the inside conical cylinder part 36 of the metal insert 30, of the seal base part 38. A front end edge of the outside seal lip 41 is in contact with (in slidable contact with) a part that is close to the radially inner end of the axially inboard surface of the thick wall part 19a and that is a more radially inner part than the edge part 22a in a state of having an interference throughout the entire circumference. Accordingly, in the case of the first embodiment, the edge part 22a is arranged at a radially more outside position than the outside seal lip 41.

The outside seal ring 29 is composed by an outside metal insert 42 and an outside seal material 43.

The outside metal insert 42 is formed by bending a metal plate such as a soft steel plate in a substantially L shape. The outside metal insert 42 is formed of: a cylindrical outside fitting cylinder part 44 having a cylindrical shape in which the outer diameter and the inner diameter are unchanged throughout the entire length in the axial direction; and an outside circular ring part 45 that is formed in a state of being bent at a right angle inward in the radial direction from the axially outboard end edge of the outside fitting cylinder part 44. The inner circumferential surface of the outside fitting cylinder part 44 of the outside metal insert 42 is externally fitted and fixed to the outside circumferential-direction step part 26 of the outer ring 2a. In this state, the axially inboard surface of the outside circular ring part 45 is in contact with the axially outboard end surface of the outer ring 2a, and the position with respect to the radial direction of the inner circumferential surface of the outside circular ring part 45 is matched (or substantially matched) with the position with respect to the radial direction of the inside circumferential-direction step part 27 of the outer ring 2a.

The outside seal material 43 is made of an elastic material such as an elastomer like a rubber. The outside seal material 43 is adhered and fixed to the outside metal insert 42. The outside seal material 43 is formed of an outside seal base part 46 and a non-contact seal lip 47 of a non-contact type.

The cross-sectional shape of the outside seal base part 46 is a substantially L shape. The outside seal base part 46 is adhered and fixed to the outside metal insert 42 in a state of covering a part from the axially inboard end edge surface of the outside fitting cylinder part 44 of the outside metal insert 42 via the outer circumferential surface of the outside fitting cylinder part 44 and the axially outboard surface of the outside circular ring part 45 to the inner circumferential surface of the outside circular ring part 45. The inner circumferential surface of the part that covers the axially inboard end surface of the outside fitting cylinder part 44 of the outside seal base part 46 is in contact with the outer circumferential surface (outer circumferential part of the outside circumferential-direction step part 26) of the outer ring 2a elastically (to have an interference) in a state where the outside seal ring 29 is assembled to the outer ring 2a. In this way, it is possible to prevent foreign substances such as water from entering a space between the axially inboard end part of the inner circumferential surface of the outside fitting cylinder part 44 and the outer circumferential surface of the outer ring 2a. The axially inboard end surface of the part that covers the inner circumferential surface of the outside circular ring part 45 of the outside metal insert 42 of the outside seal base part 46 is in contact with the radially outer end part of the axially outboard surface of the seal base part 38 that constitutes the inside seal ring 28 elastically (to have an interference). In this way, it is possible to prevent foreign substances such as water from entering a space between the axially inboard surface of the outside circular ring part 45 and the axially outboard end surface of the outer ring 2a.

The non-contact seal lip 47 corresponds to a seal lip (scatter prevention seal lip) which includes a scatter prevention function. The non-contact seal lip 47 is formed of a tube part 48 and an inward-direction protrusion part 49.

The tube part 48 is formed in a state of extending straight outward in the axial direction from the radially outer end part of the axially outboard surface of the outside seal base part 46. The tube part 48 is slightly slanted more outward in the radial direction toward the more outward in the axial direction.

The inward-direction protrusion part 49 is formed on the axially outboard end part of the inner circumferential surface of the tube part 48 in a state of protruding inward in the radial direction from the inner circumferential surface of the tube part 48 throughout the entire circumference. The inward-direction protrusion part 49 is formed in a substantially triangular cross-sectional shape in which the thickness with respect to the axial direction is smaller toward the more inside in the radial direction.

The non-contact seal lip 47 having the configuration as described above is provided in a state where the front end edge (axially outboard end edge) of the non-contact seal lip 47 has a slight gap in the axial direction with (closely faces) a part close to the radially inner end of the axially inboard surface of the thin wall part 20a that constitutes the rotational-side flange 9a. In this way, a labyrinth seal 50 is formed between the front end edge of the non-contact seal lip 47 and the axially inboard surface of the thin wall part 20a.

A part that is surrounded from three directions by the inner circumferential surface of the tube part 48, a region, which is adjacent to the axially inboard end portion of the tube part 48, of the axially outboard surface of the outside seal base part 46, and the axially inboard surface of the inward-direction protrusion part 49 is a grease reservoir part 51. It is preferable that the grease reservoir part 51 have a volume that is capable of accommodating the total amount (volume) of grease that is provided in a first grease space 77 which is partitioned by the inside seal lip 39 and the middle seal lip 40 and grease that is provided in a second grease space 78 which is partitioned by the middle seal lip 40 and the outside seal lip 41.

The labyrinth seal 50 is provided more outside with respect to the radial direction than the edge part 22a in a state where the outside seal ring 29 is assembled to the outer ring 2a as described above. The front end edge of the non-contact seal lip 47 is arranged at a more outside position with respect to the axial direction than the edge part 22a. The axially middle part of the non-contact seal lip 47 is overlapped in the radial direction with the edge part 22a. Further, the grease reservoir part 51 of the non-contact seal lip 47 is positioned at the part that radially overlaps with the edge part 22a.

In the first embodiment, the rotational-side flange (flange) 9a has a ridge part (edge part) 22a that scatters grease radially outward by a centrifugal force in a use state. The seal device 17b has the outside seal lip (leak prevention seal lip, first seal lip) 41 that seals the opening part of the internal space (space) 16 between the outer ring 2a and the hub 3a and the non-contact seal lip (scatter prevention seal lip, second seal lip) 47 in which at least part of the non-contact seal lip 47 is arranged at a radially more outer position than the ridge part 22a, and at least part of the non-contact seal lip 47 is arranged to be radially overlapped with the ridge part 22a. The non-contact seal lip 47 has an inner circumferential surface 49s that is arranged, in the axial direction, between a front end part (axially outboard end part) and an overlapping position that radially overlaps with the ridge part 22a and that is arranged radially more inside at a farther position from the outer ring 2a.

In the wheel-supporting rolling bearing unit 1a of the first embodiment having the configuration as described above, the rotational-side flange 9a includes the thick wall part 19a and the thin wall part 20a and has a structure in which an indifferentiable part (edge part (ridge part) 22a) is present at a portion between the thick wall part 19a and the thin wall part 20a (continuation part 21a) with respect to the radial direction. Based on the structure, a structure is realized in which it is possible to prevent the grease that is encapsulated in the internal space 16 from being leaked to the external space, and when the grease is leaked from the internal space 16, it is possible to prevent the grease from being scattered by a centrifugal force and adhering to the rotor which constitutes the disk brake.

The reason for the wheel-supporting rolling bearing unit 1a of the first embodiment being capable of preventing the grease that is encapsulated in the internal space 16 from being leaked to the external space is that: the inside seal lip 39 that constitutes the inside seal ring 28 is in contact with (in slidable contact with) the outer circumferential surface of the hub main body 7a in a state of having an interference throughout the entire circumference; the middle seal lip 40 is in contact with (in slidable contact with) the radially inner end part of the axially inboard surface of the thick wall part 19a that constitutes the rotational-side flange 9a in a state of having an interference throughout the entire circumference; and the front end edge of the outside seal lip 41 that constitutes the inside seal ring 28 is in contact with (in slidable contact with) a part that is close to the radially inner end of the axially inboard surface of the thick wall part 19a and that is a radially more inner part than the edge part 22a in a state of having an interference throughout the entire circumference.

The reason for the wheel-supporting rolling bearing unit 1a of the first embodiment being capable of preventing, when the grease is leaked from the internal space 16, the grease from being scattered by a centrifugal force and adhering to the rotor which constitutes the disk brake is that the non-contact seal lip 47 that constitutes the outside seal ring 29 is provided.

That is, the grease that is leaked from the internal space 16 moves radially outward along the axially inboard surface of the thick wall part 19a of the rotational-side flange 9a by a centrifugal force and reaches the edge part 22a. Then, the grease is shaken out from the axially inboard surface of the thick wall part 19a by the centrifugal force and moves outward in the radial direction. In the case of the first embodiment, the grease reservoir part 51 is provided on a part, which is radially overlapped with the edge part 22a, of the non-contact seal lip 47. Therefore, it is possible to store the grease that is moved as described above in the grease reservoir part 51. Further, even when the grease is leaked axially outward from the grease reservoir part 51, the labyrinth seal 50 is provided, and therefore, it is possible to prevent the grease from being leaked to a radially more outer space than the non-contact seal lip 47. In this way, even when the grease is leaked from the internal space 16, it is possible to prevent the grease from being scattered by a centrifugal force and adhering to the rotor that constitutes the disk brake.

### [Second Embodiment]

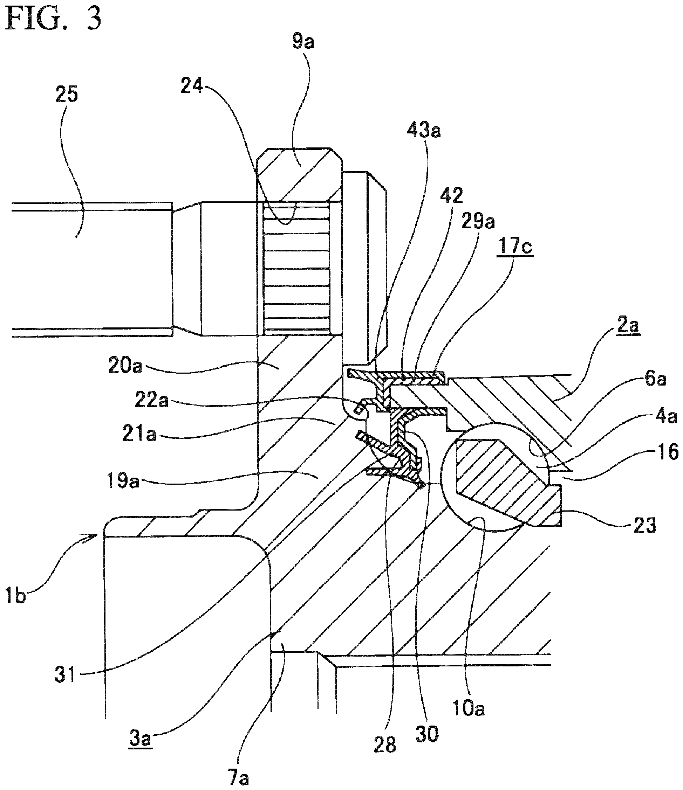

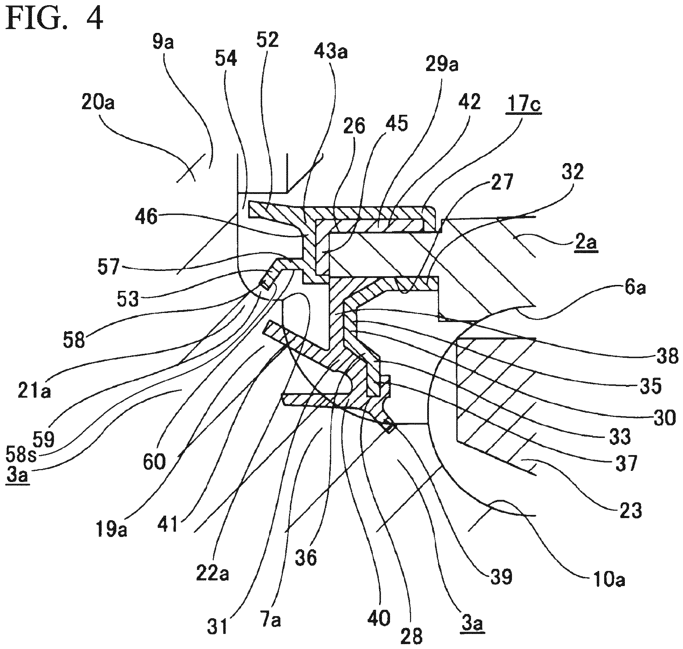

A second embodiment of the present invention is described with reference to FIGS. 3 and 4. A wheel-supporting rolling bearing unit 1b of the second embodiment also includes a seal device 17c for sealing an axially outboard end opening part of the internal space 16 which is present between the inner circumferential surface of the outer ring 2a and the outer circumferential surface of the hub 3a.

Specifically, in the case of the second embodiment, the structure of an outside seal ring 29a that constitutes the seal device 17c is different from the structure of the outside seal ring 29 of the first embodiment described above. The structure of the inside seal ring 28 that constitutes the seal device 17c is similar to the case of the first embodiment described above.

The outside seal ring 29a is formed of the outside metal insert 42 and an outside seal material 43a.

The structure of the outside metal insert 42 is similar to the case of the first embodiment described above.

The outside seal material 43a is made of an elastic material such as an elastomer like a rubber. The outside seal material 43a is adhered and fixed to the outside metal insert 42. The outside seal material 43a includes the outside seal base part 46, a first non-contact seal lip 52 of a non-contact type, and a second non-contact seal lip 53 of a non-contact type.

The structure of the outside seal base part 46 is similar to the case of the first embodiment described above.

The first non-contact seal lip 52 corresponds to a seal lip (scatter prevention seal lip, second seal lip) which includes a scatter prevention function. The first non-contact seal lip 52 has a structure in which the inward-direction protrusion part 49 is omitted from the non-contact seal lip 47 of the first embodiment described above. Specifically, the first non-contact seal lip 52 has a tube shape. The first non-contact seal lip 52 is formed in a state of extending straight axially outward from the radially outer end part of the axially outboard surface of the outside seal base part 46. The first non-contact seal lip 52 is slightly slanted radially more outward toward the axially more outward direction.

The first non-contact seal lip 52 having the configuration as described above is provided in a state where the front end edge (axially outboard end edge) of the first non-contact seal lip 52 has a slight gap with (closely faces) a part close to the radially inner end of the axially inboard surface of the thin wall part 20a that constitutes the rotational-side flange 9a. In this way, a first labyrinth seal 54 is formed between the front end edge of the first non-contact seal lip 52 and the axially inboard surface of the thin wall part 20a.

The second non-contact seal lip 53 also corresponds to a seal lip (scatter prevention seal lip, second seal lip) which includes a scatter prevention function. The second non-contact seal lip 53 is formed of a circular tube part 57 and a conical tube part 58.

The circular tube part 57 is provided in a state of extending axially outward from a part close to the radially inner end of the axially outboard surface of the outside seal base part 46.

The conical tube part 58 is provided in a state of extending to be slanted axially outward and radially inward from the axially outboard end edge of the circular tube part 57.

Such a second non-contact seal lip 53 is provided in a state where the front end edge (axially outboard end edge) of the second non-contact seal lip 53 has a slight radial-direction gap with (closely faces) a radially middle part of the axially inboard surface of the continuation part 21a that constitutes the rotational-side flange 9a. In this way, a second labyrinth seal 59 is formed between the front end edge of the second non-contact seal lip 53 and the axially inboard surface of the continuation part 21a.

In the case of the second embodiment, a part that is surrounded from three directions by the inner circumferential surface of the circular tube part 57, a region, which is adjacent to the axially inboard end portion of the circular tube part 57, of the axially outboard surface of the outside seal base part 46, and the inner circumferential surface of the conical tube part 58 is a grease reservoir part 60.

The first labyrinth seal 54 and the second labyrinth seal 59 are provided more outside with respect to the radial direction than the edge part 22a in a state where the outside seal ring 29a is assembled to the outer ring 2a as described above. The position with respect to the axial direction of the front end edge of each of the first and second non-contact seal lips 52, 53 is arranged at a more axially outboard position than the position with respect to the axial direction of the edge part 22a. The axially middle parts of the first and second non-contact seal lips 52, 53 are radially overlapped with the edge part 22a. Further, the grease reservoir part 60 is present at a part, which radially overlaps with the edge part 22a, of the second non-contact seal lip 53.

Also in the wheel-supporting rolling bearing unit 1b of the second embodiment having the configuration as described above, the rotational-side flange 9a includes the thick wall part (first part) 19a and the thin wall part (second part) 20a and has a structure in which an indifferentiable part (edge part 22a) is present at a portion between the thick wall part 19a and the thin wall part 20a with respect to the radial direction. Based on the structure, a structure is realized in which it is possible to prevent the grease that is encapsulated in the internal space 16 from being leaked to the external space, and when the grease is leaked from the internal space 16, it is possible to prevent the grease from being scattered by a centrifugal force and adhering to the rotor which constitutes the disk brake.

The reason for such a wheel-supporting rolling bearing unit 1b of the second embodiment being capable of preventing the grease that is encapsulated in the internal space from being leaked to the external space is similar to the case of the first embodiment described above.

In the second embodiment, the rotational-side flange (flange) 9a has a ridge part (edge part) 22a that scatters grease radially outward by a centrifugal force in a use state. The seal device 17c has the outside seal lip (leak prevention seal lip, first seal lip) 41 that seals the opening part of the internal space (space) 16 between the outer ring 2a and the hub 3a and the non-contact seal lip (scatter prevention seal lip, second seal lip) 53 in which at least part of the non-contact seal lip 53 is arranged at a radially more outer position than the ridge part 22a, and at least part of the non-contact seal lip 53 is arranged to be radially overlapped with the ridge part 22a. The non-contact seal lip 53 has an inner circumferential surface 58s that is arranged, in the axial direction, between a front end part (axially outboard end part) and an overlapping position that radially overlaps with the ridge part 22a and that is arranged radially more inside at a farther position from the outer ring 2a.

The reason for the wheel-supporting rolling bearing unit 1b of the second embodiment being capable of preventing, when the grease is leaked from the internal space 16, the grease from being scattered by a centrifugal force and adhering to the rotor which constitutes the disk brake is that the first and second non-contact seal lips 52, 53 that constitute the outside seal ring 29a are provided.

That is, the grease that is leaked from the internal space 16 moves radially outward along the axially inboard surface of the thick wall part 19a of the rotational-side flange 9a by a centrifugal force and reaches the edge part 22a. Then, the grease is shaken out from the axially inboard surface of the thick wall part 19a by the centrifugal force and moves radially outward. In the case of the second embodiment, the grease reservoir part 60 is provided on a part, which is overlapped in the radial direction with the edge part 22a, of the second non-contact seal lip 53. Therefore, it is possible to store the grease that is moved as described above in the grease reservoir part 60. Further, even when the grease is leaked axially outward from the grease reservoir part 60, the second labyrinth seal 59 is provided, and therefore, it is possible to prevent the grease from being leaked to a radially more outer space than the second non-contact seal lip 53. Furthermore, even when the grease is leaked to the radially more outer space than the second non-contact seal lip 53, the first labyrinth seal 54 is provided, and therefore, it is possible to prevent the grease from being leaked to a radially more outer space than the first labyrinth seal 54. In this way, in the case of the second embodiment, even when the grease is leaked from the internal space 16, it is possible to further effectively prevent the grease from being scattered by a centrifugal force and adhering to the rotor that constitutes the disk brake. Other configurations, operations, and advantages are similar to the case of the first embodiment described above.

### [Third Embodiment]

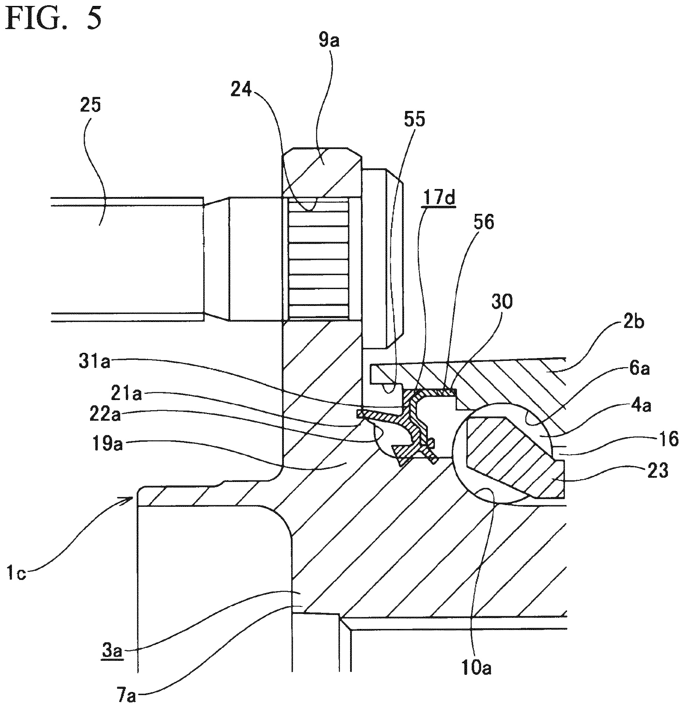

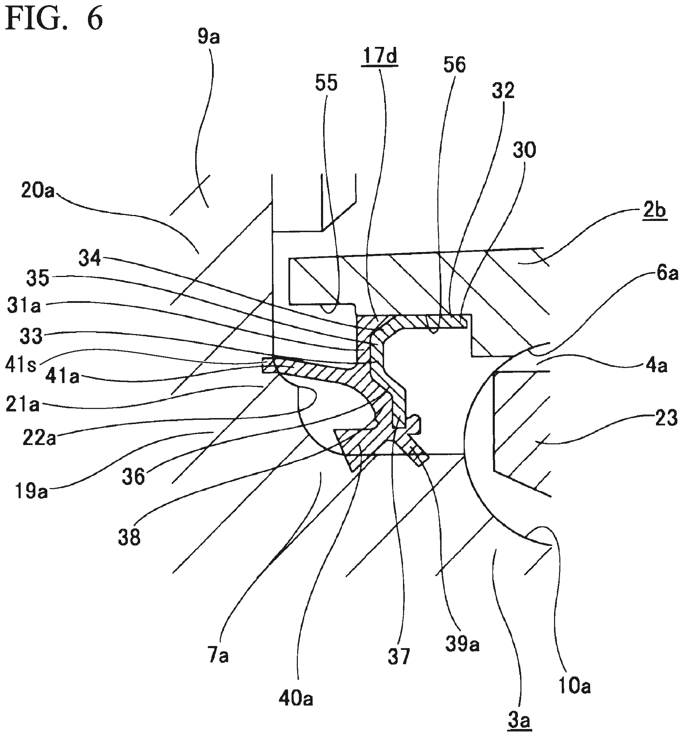

A third embodiment of the present invention is described with reference to FIGS. 5 and 6. A wheel-supporting rolling bearing unit 1c of the third embodiment is used for a drive wheel and includes an outer ring 2b, a hub 3a that is arranged on an inner side of the outer ring 2b, and a plurality of rolling elements 4a for rotatably supporting the hub 3a by the outer ring 2b. Each of the rolling elements 4a is arranged to be capable of rolling between double-row outer raceways 6a, 6b (with respect to the outer raceway 6b, refer to FIG. 13) that are formed on an inner circumferential surface of the outer ring 2b and double-row inner raceways 10a, 10b (with respect to the inner raceway 10b, refer to FIG. 13) that are formed on an outer circumferential surface of the hub 3a in a state of being held by a retainer 23 for each row.

The wheel-supporting rolling bearing unit 1c of the third embodiment has a structure of the outer ring 2b that is different from the structure of the outer ring 2a of the first embodiment and the second embodiment described above. Specifically, the outside circumferential-direction step part 26 of the first embodiment and the second embodiment described above is not formed on a region from a part close to the axially outboard end of the outer circumferential surface of the outer ring 2b to the axially outboard end part, and the region maintains a forged surface having a draft angle.

A first dent cylindrical surface part 55 is formed on an axially outboard end part of the inner circumferential surface of the outer ring 2b.

A second dent cylindrical surface part 56 that corresponds to the inside circumferential-direction step part 27 of the first embodiment and the second embodiment described above is formed at a position, which is adjacent to an axially inboard part of the first dent cylindrical surface part 55, of a part close to the axially outboard end of the inner circumferential surface of the outer ring 2b.

The axially outboard end surface of the outer ring 2b is arranged at an axially more outboard position than the axially inboard surface of the thick wall part 19a that constitutes the rotational-side flange 9a. That is, the axially outboard end surface of the outer ring 2b is arranged at an axially more outboard position in the axial direction than the edge part (ridge part) 22a which corresponds to the indifferentiable part and which continuously connects a radially inner end edge of an axially inboard surface of the continuation part 21a that constitutes the rotational-side flange 9a and a radially outer end edge of an axially inboard surface of the thick wall part 19a.

The wheel-supporting rolling bearing unit 1c of the third embodiment also includes a seal device 17d for sealing an axially outboard end opening part of the internal space 16 which is present between the inner circumferential surface of the outer ring 2b and the outer circumferential surface of the hub 3a. In the case of the third embodiment, the seal device 17d does not include a member that corresponds to the outside seal rings 29, 29a included in the seal devices 17b, 17c that constitute the wheel-supporting rolling bearing units 1a, 1b of the first and second embodiments described above.

Hereinafter, the structure of the seal device 17d included in the wheel-supporting rolling bearing unit 1c of the third embodiment is described.

The seal device 17d is formed of a metal insert 30 and a seal material 31a.

The metal insert 30 is formed by bending a metal plate such as a soft steel plate. The metal insert 30 includes a fitting cylinder part 32 and a circular ring-shaped part 33 that is formed in a state of being bent radially inward from the axially outboard end edge of the fitting cylinder part 32.

The fitting cylinder part 32 is formed in a cylindrical shape in which the outer diameter and the inner diameter are unchanged throughout the entire length in the axial direction.

The circular ring-shaped part 33 is formed of an outside conical cylinder part 34, an outside circular ring part 35, an inside conical cylinder part 36, and an inside circular ring part 37.

The outside conical cylinder part 34 is formed in a state of being bent (slanted) axially outward and radially inward from the axially outboard end edge of the fitting cylinder part 32.

The outside circular ring part 35 is formed in a state of being bent radially inward from the radially inner end edge (axially outboard end edge) of the outside conical cylinder part 34.

The inside conical cylinder part 36 is formed in a state of being bent (slanted) axially inward and radially inward from the radially inner end edge of the outside circular ring part 35.

The inside circular ring part 37 is formed in a state of being bent radially inward from the radially inner end edge (axially inboard end edge) of the inside conical cylinder part 36.

The outer circumferential surface of the fitting cylinder part 32 of the metal insert 30 having such a configuration is internally fitted and fixed to the second dent cylindrical surface part 56 that is formed on the part close to the axially outboard end of the outer ring 2b.

The seal material 31a is made of an elastic material such as an elastomer like a rubber. The seal material 31 is adhered and fixed to the metal insert 30. The seal material 31 includes a seal base part 38 and three contact seal lips (an inside seal lip 39a, a middle seal lip 40a, and an outside seal lip 41a). FIGS. 5 and 6 show a shape in a free state of each seal lip (the inside seal lip 39a, the middle seal lip 40a, and the outside seal lip 41a).

The seal base part 38 has a substantially circular ring shape. The seal base part 38 is adhered and fixed to the metal insert 30 in a state of covering a part from the axially outboard surface (outer circumferential surface of the outside conical cylinder part 34) of the circular ring-shaped part 33 of the metal insert 30 via the inner circumferential surface of the circular ring-shaped part 33 (inside circular ring part 37) to the radially inner end part of the axially inboard surface of the circular ring-shaped part 33 (inside circular ring part 37).

The inside seal lip 39a is formed in a state of extending to be slanted axially inward and radially inward from a part, which covers the inner circumferential surface of the circular ring-shaped part 33 of the metal insert 30, of the seal base part 38. A front end edge of the inside seal lip 39a is in contact with (in slidable contact with) the outer circumferential surface of the hub main body 7a at a position adjacent to the axially inner side of the base end part of the rotational-side flange 9a in a state of having an interference throughout the entire circumference.

The middle seal lip 40a has a substantially triangular cross-sectional shape. The middle seal lip 40a is formed in a state of extending axially outward and radially inward from the radially inner end part of the axially outboard surface of the seal base part 38. A radially inner end edge of the middle seal lip 40a is in contact with (in slidable contact with) a part, which is an axially more outboard part than the position with which the inside seal lip 39a is in contact and which is an axially more inner part than the radially inner end edge of the axially inboard surface of the thick wall part 19a that constitutes the rotational-side flange 9a, of the outer circumferential surface of the hub main body 7a in a state of having an interference throughout the entire circumference.

The outside seal lip 41a is a member that corresponds to one side lip which is a seal lip (leak prevention seal lip) including a leak prevention function and which is also a seal lip (scatter prevention seal lip) including a scatter prevention function. The outside seal lip 41a is formed in a state of extending to be slanted axially outward and radially outward from a part, which covers a continuation part between the inner circumferential surface of the inside conical cylinder part 36 of the metal insert 30 and the axially outboard surface of the outside circular ring part 35, of the seal base part 38. A front end edge of the outside seal lip 41a is in contact with (in slidable contact with) a part that is close to the radially inner end part (radially outer end part of the axially inboard surface of the continuation part 21a) of the axially inboard surface of the thin wall part 20a that constitutes the rotational-side flange 9a in a state of having an interference throughout the entire circumference. That is, the front end edge of the outside seal lip 41a is in contact with (in slidable contact with), in a state of having an interference throughout the entire circumference, a portion which is part of the axially inboard surface of the rotational-side flange 9a, at which the radially inner end edge of the axially inboard surface of the continuation part 21a and the radially outer end edge of the axially inboard surface of thick wall part 19a are continuously connected to each other, and which is a radially more outer part than the edge part 22a.

In the third embodiment, the rotational-side flange (flange) 9a has a ridge part (edge part) 22a that scatters grease radially outward by a centrifugal force in a use state. The seal device 17d has the middle seal lip (leak prevention seal lip, first seal lip) 40a that seals an opening part of the internal space (space) 16 between the outer ring 2b and the hub 3a and the outside seal lip (scatter prevention seal lip, second seal lip) 41a in which at least part of the outside seal lip 41a is arranged at a radially more outer position than the ridge part 22a and at least part of the outside seal lip 41a is arranged to be radially overlapped with the ridge part 22a. The outside seal lip 41a has the leak prevention function in addition to the scatter prevention function. The outside seal lip 41a has a front end part 41s that is in slidable contact with the side surface (side surface of the rotational-side flange 9a) of the hub 3a at a radially more outer position than the ridge part 22a.

In the wheel-supporting rolling bearing unit 1c of the third embodiment having the configuration as described above, the rotational-side flange 9a includes the thick wall part (first part) 19a and the thin wall part (second part) 20a and has a structure in which an indifferentiable part (edge part 22a) is present at a portion between the thick wall part 19a and the thin wall part 20a (continuation part 21a) with respect to the radial direction. Based on the structure, a structure is realized in which it is possible to prevent the grease that is encapsulated in the internal space 16 from being leaked to the external space, prevent the grease from further being scattered, and prevent the grease from adhering to the rotor which constitutes the disk brake.

The reason for the wheel-supporting rolling bearing unit 1c of the third embodiment being capable of preventing the grease that is encapsulated in the internal space 16 from being leaked to the external space and preventing the grease from further being scattered is that: the inside seal lip 39a and the middle seal lip 40a that constitute the seal device 17d are in contact with (in slidable contact with) the outer circumferential surface of the hub main body 7a in a state of having an interference throughout the entire circumference; and the front end edge of the outside seal lip 41a that constitutes the seal device 17d is in contact with (in slidable contact with) the part that is close to the radially inner end part (radially outer end part of the axially inboard surface of the continuation part 21a) of the axially inboard surface of the thin wall part 20a in a state of having an interference throughout the entire circumference. In the case of the third embodiment, the edge part 22a is arranged at a radially more inner position than the outside seal lip 41a. Therefore, even when the grease is moved by a centrifugal force along the axially inboard surface of the thick wall part 19a to the edge part 22a and is shaken out from the axially inboard surface of the thick wall part 19a at the edge part 22a, the grease adheres to an axially middle part of the inner circumferential surface of the outside seal lip 41a and is not further scattered. Other configurations, operations, and advantages are similar to the case of the first embodiment described above.

### [Fourth Embodiment]

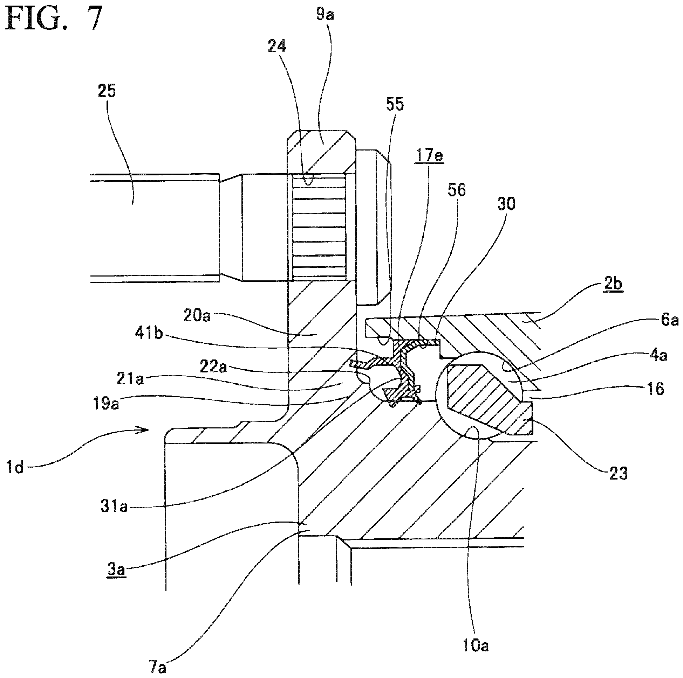

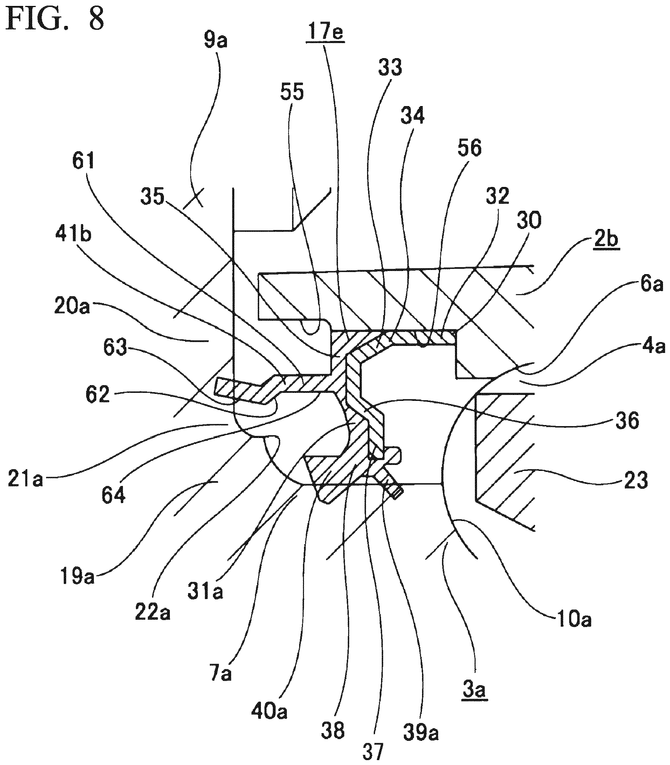

A fourth embodiment of the present invention is described with reference to FIGS. 7 and 8. A wheel-supporting rolling bearing unit 1d of the fourth embodiment also includes a seal device 17e for sealing an axially outboard end opening part of an internal space 16 that is present between the inner circumferential surface of the outer ring 2b and the outer circumferential surface of the hub 3a similarly to the embodiments described above. In the case of the fourth embodiment, the shape of an outside seal lip 41b of a seal material 31a that constitutes the seal device (seal ring) 17e is different from the case of the third embodiment described above. Also in the case of the fourth embodiment, the outside seal lip 41b is a member that corresponds to one side lip which is a seal lip (leak prevention seal lip) including a leak prevention function and which is also a seal lip (scatter prevention seal lip) including a scatter prevention function.

In the case of the fourth embodiment, the outside seal lip 41b is formed of a circular tube part 61, a first conical tube part 62, and a second conical tube part 63.

The circular tube part 61 is provided in a state of extending axially outward from a part which is part of the seal base part 38 that constitutes the seal material 31a and which covers a part close to the radially inner end of the axially outboard surface of the outside circular ring part 35 of the metal insert 30.

The first conical tube part 62 is provided in a state of extending to be slanted axially outward and radially inward from the axially outboard end edge of the circular tube part 61.

The second conical tube part 63 is provided in a state of extending to be slanted axially outward and radially outward from the axially outboard end edge of the first conical tube part 62.

A front end edge of the outside seal lip 41b is in contact with (in slidable contact with) a part close to the radially inner end of the axially inboard surface of the thin wall part (second part) 20a that constitutes the rotational-side flange 9a in a state of having an interference throughout the entire circumference.

A part that is surrounded from three directions by the inner circumferential surface of the circular tube part 61, a region which is part of the axially outboard surface of the outside seal base part 38 and which is adjacent to the axially inboard end portion of the circular tube part 61, and the inner circumferential surface of the first conical tube part 62 is a grease reservoir part 64.

An axially outboard end portion of the grease reservoir part 64 is radially overlapped with the edge part (ridge part) 22a in a state where the seal device 17e is assembled to the outer ring 2b.

In the fourth embodiment, the rotational-side flange (flange) 9a has a ridge part (edge part) 22a that scatters grease radially outward by a centrifugal force in a use state. The seal device 17e has the middle seal lip (leak prevention seal lip, first seal lip) 40a that seals an opening part of the internal space (space) 16 between the outer ring 2b and the hub 3a and the outside seal lip (scatter prevention seal lip, second seal lip) 41b in which at least part of the outside seal lip 41b is arranged at a radially more outer position than the ridge part 22a and at least part of the outside seal lip 41b is arranged to be radially overlapped with the ridge part 22a. The outside seal lip 41b has the leak prevention function in addition to the scatter prevention function. The front end part of the second conical tube part 63 that constitutes the outside seal lip 41b is in slidable contact with the side surface (side surface of the rotational-side flange 9a) of the hub 3a at a radially more outer position than the ridge part 22a.

In the case of the wheel-supporting rolling bearing unit 1d of the fourth embodiment having the configuration as described above, even when the grease is moved by a centrifugal force along the axially inboard surface of the thick wall part (first part) 19a of the rotational-side flange 9a to the edge part 22a and is shaken out from the axially inboard surface of the thick wall part 19a at the edge part 22a, the grease is stored in the grease reservoir part 64 of the outside seal lip 41b.
Therefore, the grease is not further scattered. Other configurations, operations, and advantages are similar to the case of the third embodiment described above.

### [Fifth Embodiment]

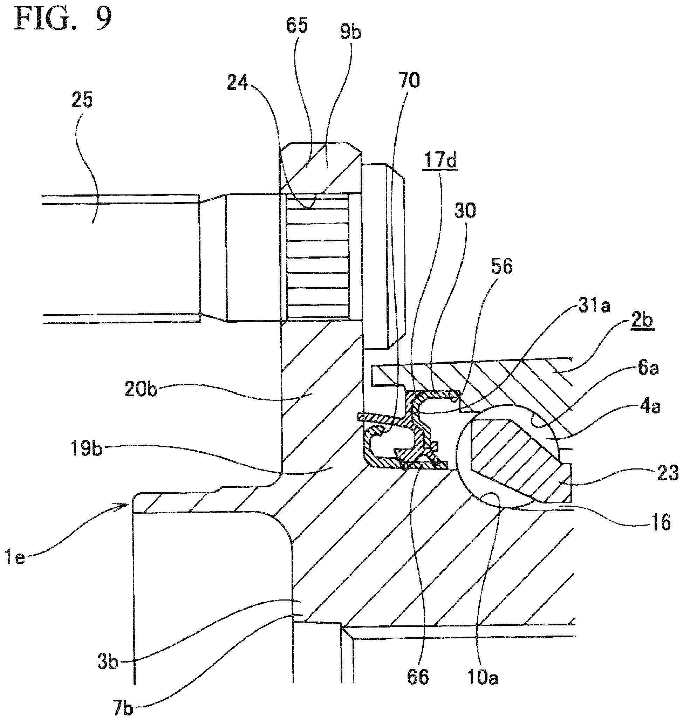

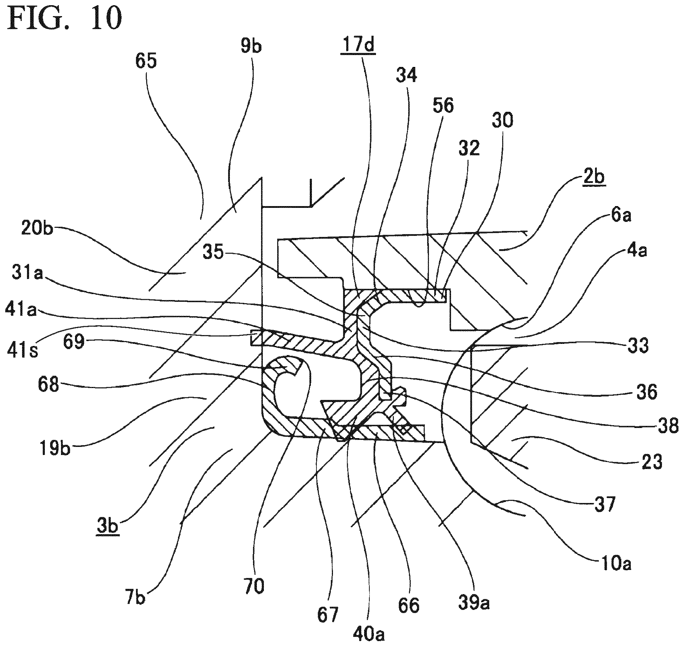

A fifth embodiment of the present invention is described with reference to FIGS. 9 and 10. A wheel-supporting rolling bearing unit 1e of the fifth embodiment is used for a driven wheel and includes an outer ring 2b, a hub 3b that is arranged on an inner side of the outer ring 2b, and a plurality of rolling elements 4a for rotatably supporting the hub 3b by the outer ring 2b. Each of the rolling elements 4a is arranged to be capable of rolling between double-row outer raceways 6a, 6b (with respect to the outer raceway 6b, refer to FIG. 13) that are formed on an inner circumferential surface of the outer ring 2b and double-row inner raceways 10a, 10b (with respect to the inner raceway 10b, refer to FIG. 13) that are formed on an outer circumferential surface of the hub 3b in a state of being held by a retainer 23 for each row.

A rotational-side flange 9b of the hub 3b that constitutes the wheel-supporting rolling bearing unit 1e of the fifth embodiment is formed of a flange main body 65 and a slide collar 66 (annular member).

The flange main body 65 is formed in a state of extending radially outward on a portion that is part of the outer circumferential surface of the hub main body 7b and that protrudes from the outer end opening of the outer ring 2b.

An axially outboard surface of the flange main body 65 is formed in a flat surface shape in which the position with respect to the axial direction is unchanged throughout the entire length in the radial direction except the radially outer end part on which a chamfered part is formed.

An axially inboard surface of the flange main body 65 is also formed in a flat surface shape in which the position with respect to the axial direction is unchanged throughout the entire length in the radial direction except the radially outer end part on which a chamfered part is formed.

Accordingly, the thickness with respect to the axial direction of the flange main body 65 is constant throughout the entire length in the radial direction except the radially outer end part.

The slide collar 66 is formed of a fitting circular tube part 67, an outward-direction flange part 68, and a folded part 69.

The outward-direction flange part 68 is formed so as to be bent radially outward from the axially outboard end edge of the fit circular tube part 67. The continuation part between the fit circular tube part 67 and the outward-direction flange part 68 is formed in a shape that fits the continuation part between the axially inboard surface of the base end part of the flange main body 65 and the outer circumferential surface of the hub main body 7b.

The folded part 69 is formed so as to be bent axially inward from the radially outer end edge of the outward-direction flange part 68 such that the cross-sectional shape is a convex curved line shape.

The slide collar 66 having the configuration as described above is fixed to the hub main body 7b in a state where the fitting circular tube part 67 is externally fitted to a position which is part of the outer circumferential surface of the hub main body 7b and which is adjacent to the axially inboard surface of the base end part of the flange main body 65. In this state, the axially outboard surface of the outward-direction flange part 68 that forms the slide collar 66 is in contact with the axially inboard surface of a region from a part close to the base end of the flange main body 65 to the base end part without a gap.

In the case of the fifth embodiment, in a state where the slide collar 66 is fixed to the flange main body 65, a combined part of the flange main body 65 and the slide collar 66 is a thick wall part 19b.

On the other hand, a part which is not axially overlapped with the slide collar 66 (a part that is arranged at a radially more outward position than the slide collar 66) of the flange main body 65 is a thin wall part 20b.

In the case of the fifth embodiment, the axially inboard end edge of the folded part 69 of the slide collar 66, which is present between the axially inboard surface of a part that corresponds to the thin wall part 20b of the flange main body 65 and the axially inboard surface of the thick wall part 19b (slide collar 66), is a discontinuity part 70 that corresponds to the indifferentiable part.

The structure of the outer ring 2b that constitutes the wheel-supporting rolling bearing unit 1e of the fifth embodiment is similar to the case of the third embodiment described above.

The wheel-supporting rolling bearing unit 1e of the fifth embodiment includes a seal device 17d for sealing an axially outboard end opening part of the internal space 16 which is present between the inner circumferential surface of the outer ring 2b and the outer circumferential surface of the hub 3b. The structure of the seal device (seal ring) 17d is similar to the structure of the third embodiment described above.

Also in the case of the fifth embodiment, the seal device 17d is fixed to the outer ring 2b in a state where the outer circumferential surface of the fitting cylinder part 32 that constitutes the metal insert 30 is internally fitted to the second dent cylindrical surface part 56 that is formed on the part close to the axially outboard end of the outer ring 2b.

In this state, the front end edge of the inside seal lip 39a of the seal material 31a that constitutes the seal device 17d is in contact with (in slidable contact with) the axially outboard end part of the outer circumferential surface of the fitting circular tube part 67 of the slide collar 66 in a state of having an interference throughout the entire circumference.

The radially inner end edge of the middle seal lip 40a of the seal material 31a is in contact with (in slidable contact with) the axially middle part of the outer circumferential surface of the fitting circular tube part 67 of the slide collar 66 in a state of having an interference throughout the entire circumference.

Further, the front end edge of the outside seal lip 41a of the seal material 31a is in contact with (in slidable contact with) a part that is close to the radially inner end of the axially inboard surface of the thin wall part 20b of the flange main body 65 and that is a radially more outer part than the discontinuity part 70 of the slide collar 66 in a state of having an interference throughout the entire circumference.

In the fifth embodiment, the rotational-side flange (flange) 9b has a discontinuity part (edge part) 70 that scatters grease radially outward by a centrifugal force in a use state. The seal device 17d has the middle seal lip (leak prevention seal lip, first seal lip) 40a that seals an opening part of the internal space (space) 16 between the outer ring 2b and the hub 3b and the outside seal lip (scatter prevention seal lip, second seal lip) 41a in which at least part of the outside seal lip 41a is arranged at a radially more outer position than the discontinuity part 70 and at least part of the outside seal lip 41a is arranged to be radially overlapped with the discontinuity part 70. The outside seal lip 41a has the leak prevention function in addition to the scatter prevention function. The outside seal lip 41a has a front end part 41s that is in slidable contact with the side surface (side surface of the rotational-side flange 9b) of the hub 3b at a radially more outer position than the discontinuity part 70.

In the wheel-supporting rolling bearing unit 1e of the fifth embodiment having the configuration as described above, the rotational-side flange 9b includes the thick wall part (first part) 19b and the thin wall part (second part) 20b and has a structure in which an indifferentiable part (discontinuity part 70) is present at a portion between, with respect to the radial direction, the thick wall part 19b and the thin wall part 20b. Based on the structure, a structure is realized in which it is possible to prevent the grease that is encapsulated in the internal space 16 from being leaked to the external space, prevent the grease from further being scattered, and prevent the grease from adhering to the rotor which constitutes the disk brake.

The reason for the wheel-supporting rolling bearing unit 1e of the fifth embodiment being capable of preventing the grease that is encapsulated in the internal space 16 from being leaked to the external space and preventing the grease from further being scattered is that: the inside seal lip 39a and the middle seal lip 40a that constitute the seal device 17d are in contact with (in slidable contact with) the outer circumferential surface of the fit circular tube part 67 of the slide collar 66 in a state of having an interference throughout the entire circumference; and the front end edge of the outside seal lip 41a that constitutes the seal device 17d is in contact with (in slidable contact with) the part that is close to the radially inner end of the axially inboard surface of the thin wall part 20b in a state of having an interference throughout the entire circumference. In the case of the fifth embodiment, the discontinuity part 70 is arranged at a radially more inner position than the outside seal lip 41a. Therefore, even when the grease is moved by a centrifugal force along the axially inboard surface of the outward-direction flange part 68 of the slide collar 66 to the discontinuity part 70 and is shaken out from the axially inboard surface of the thick wall part 19b at the discontinuity part 70, the grease adheres to an axially middle part of the inner circumferential surface of the outside seal lip 41a and is not further scattered.

Specifically, in the case of the fifth embodiment, the folded part 69 is provided on the slide collar 66, and therefore, it is possible to make the grease that is moved along the axially inboard surface of the outward-direction flange part 68 of the slide collar 66 to be not easily moved to the discontinuity part 70.

When the fifth embodiment is implemented, it is possible to adopt the seal device 17e of the fourth embodiment described above in place of the seal device 17d. Other configurations, operations, and advantages are similar to the case of the first embodiment described above.

### [Sixth Embodiment]

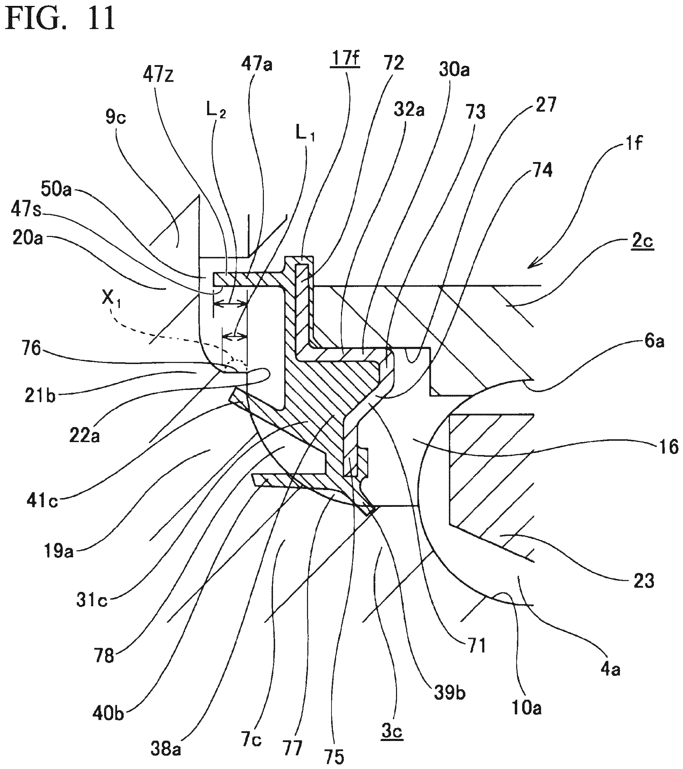

A sixth embodiment of the present invention is described with reference to FIG. 11. A region from a part close to the axially outboard end to an axially outboard end part of the outer circumferential surface of an outer ring 2c that constitutes a wheel-supporting rolling bearing unit If of the sixth embodiment maintains a forged surface and is formed in a substantially cylindrical surface shape having little change in the outer diameter of a degree of a draft angle with respect to the axial direction. That is, the outer ring 2c that constitutes the wheel-supporting rolling bearing unit If of the sixth embodiment does not have the outside circumferential-direction step part 26 which is included in the outer ring 2a that constitutes the wheel-supporting rolling bearing unit 1a of the first embodiment described above. On the other hand, an inside circumferential-direction step part 27 that is concaved radially outward throughout the entire circumference is formed on a region from a part close to the axially outboard end to an axially outboard end part of the inner circumferential surface of the outer ring 2c similarly to the outer ring 2a that constitutes the wheel-supporting rolling bearing unit 1a of the first embodiment described above.

The wheel-supporting rolling bearing unit If of the sixth embodiment includes a seal device 17f for sealing an axially outboard end opening part of an internal space 16 which has a substantially cylindrical shape, which is present between the inner circumferential surface of the outer ring 2c and the outer circumferential surface of the hub 3c, and in which rolling elements 4a are arranged. Grease is encapsulated in the internal space 16.

The seal device 17f is formed of a metal insert 30a and a seal material 31c.

The metal insert 30a is formed by bending a metal plate such as a soft steel plate. The metal insert 30a includes a fitting cylinder part 32a, an inner-diameter-side circular ring-shaped part 71, and an outer-diameter-side circular ring-shaped part 72.

The fitting cylinder part 32a is formed in a cylindrical shape in which the outer diameter and the inner diameter are unchanged throughout the entire length in the axial direction.

The inner-diameter-side circular ring-shaped part 71 is formed of a first circular ring-shaped part 73, a conical part 74, and a second circular ring-shaped part 75.

The first circular ring-shaped part 73 is formed in a state of being bent radially inward from the axially inboard end edge of the fitting cylinder part 32a.

The conical part 74 is formed in a state of being bent (slanted) axially outward and radially inward from the radially inner end edge of the first circular ring-shaped part 73.

The second circular ring-shaped part 75 is formed in a state of being bent radially inward from the radially inner end edge of the conical part 74.

The outer-diameter-side circular ring-shaped part 72 is formed in a state of being bent radially outward from the axially outboard end edge of the fitting cylinder part 32a.

The outer circumferential surface of the fitting cylinder part 32a of the metal insert 30a having such a configuration is internally fitted and fixed directly to the inside circumferential-direction step part 27 of the outer ring 2c. In such a fixation state, the axially inboard surface of the outer-diameter-side circular ring-shaped part 72 is arranged at a slightly more outside position in the axial direction than the axially outboard end surface of the outer ring 2c. Part of a seal base part 38a described below of the seal material 31c is present between the axially inboard surface of the outer-diameter-side circular ring-shaped part 72 and the axially outboard end surface of the outer ring 2c.

The seal material 31c is made of an elastic material such as an elastomer like a rubber. The seal material 31c is adhered and fixed to the metal insert 30a. The seal material 31c includes the seal base part 38a, three contact seal lips (an inside seal lip 39b, a middle seal lip 40b, and an outside seal lip 41c), and a non-contact seal lip 47a. FIG. 11 shows a shape in a free state of each seal lip (the inside seal lip 39b, the middle seal lip 40b, and the outside seal lip 41c).

The seal base part 38a has a substantially circular ring shape. The seal base part 38a is adhered and fixed to the metal insert 30a in a state of covering a region from a part close to a radially inner end of the axially inboard surface of the inner-diameter-side circular ring-shaped part 71 of the metal insert 30a via the axially outboard surface of the metal insert 30a to the axially inboard surface of the outer-diameter-side circular ring-shaped part 72.

The inside seal lip 39b is formed in a state of extending to be slanted axially inward and radially inward from a part, which covers the inner circumferential surface of the inner-diameter-side circular ring-shaped part 71 of the metal insert 30a, of the seal base part 38a. A front end edge of the inside seal lip 39b is in contact with (in slidable contact with) the outer circumferential surface of the hub main body 7c at a position adjacent to the axially inboard side of the base end part of the rotational-side flange 9c in a state of having an interference throughout the entire circumference.

The middle seal lip 40b is formed in a state of extending axially outward from the radially inner end part of the axially outboard surface of the seal base part 38a. A front end edge of the middle seal lip 40b is in contact with (in slidable contact with) a continuation part between the outer circumferential surface of the hub main body 7c and the axially inboard surface of the thick wall part (first part) 19a that constitutes the rotational-side flange 9c in a state of having an interference throughout the entire circumference.

The outside seal lip 41c is a member that corresponds to a seal lip (leak prevention seal lip) including a leak prevention function. The outside seal lip 41c is formed in a state of extending to be slanted axially outward and radially outward from a part close to the radially inner end of the axially outboard surface of the seal base part 38a. A front end edge of the outside seal lip 41c is in contact with (in slidable contact with) a region in the vicinity of a part close to the radially outer end of the axially inboard surface of the thick wall part 19a that constitutes the rotational-side flange 9c in a state of having an interference throughout the entire circumference. That is, the front end edge of the outside seal lip 41c is in contact with (in slidable contact with), in a state of having an interference throughout the entire circumference, a radially more inboard part than the radially outer end edge (edge part 22a) of the axially inboard surface of the thick wall part 19a.

The non-contact seal lip 47a is a member that corresponds to a seal lip (scatter prevention seal lip) which includes a scatter prevention function. The non-contact seal lip 47a is formed in a state of extending axially outward from a portion close to the radially outer end of a part, which covers the axially outboard surface of the outer-diameter-side circular ring-shaped part 72 of the metal insert 30a, of the seal base part 38a. In the case of the sixth embodiment, the non-contact seal lip 47a is formed in a cylindrical shape in which the inner diameter and the outer diameter are unchanged with respect to the axial direction. The non-contact seal lip 47a is provided in a state where the front end edge (axially outboard end edge) of the non-contact seal lip 47a has a slight axial-direction gap with (closely faces) a part close to the radially inner end of the axially inboard surface of the thin wall part 20a that constitutes the rotational-side flange 9c. In this way, a labyrinth seal 50a is formed between the front end edge of the non-contact seal lip 47a and the axially inboard surface of the thin wall part (second part) 20a.

In the sixth embodiment, the rotational-side flange (flange) 9c has a ridge part (edge part) 22a that scatters grease radially outward by a centrifugal force in a use state. The seal device 17f has the outside seal lip (leak prevention seal lip, first seal lip) 41c that seals the opening part of the internal space (space) 16 between the outer ring 2c and the hub 3c and the non-contact seal lip (scatter prevention seal lip, second seal lip) 47a in which at least part of the non-contact seal lip 47a is arranged at a radially more outer position than the ridge part 22a, and at least part of the non-contact seal lip 47a is arranged to be radially overlapped with the ridge part 22a. The non-contact seal lip 47a has an inner circumferential surface 47s that is arranged, in the axial direction, between a front end part (axially outboard end part) 47z and an overlapping position that radially overlaps with the ridge part 22a and that is substantially parallel with the axial direction.

In the case of the sixth embodiment, a hub-side cylindrical surface part 76 having a cylindrical surface shape of which the generatrix shape is a straight line shape that is parallel with the center axis of the hub main body 7c and of which the outer diameter with respect to the axial direction is unchanged is provided on a part (a part, which is adjacent to the axially outboard direction of the edge part 22a, of the outer circumferential surface of the axially inboard end part of the thick wall part 19a) between the edge part 22a and the radially inner end edge of the axially inboard surface of a continuation part 21b that constitutes the hub main body 7c. In the case of the sixth embodiment, the axially outboard end edge of the hub-side cylindrical surface part 76 is arranged at an axially more inboard position than the axially outboard end edge (front end edge) of the non-contact seal lip 47a. That is, a length (axial-direction length of the hub-side cylindrical surface part 76) L₁ from the axially inboard end edge (edge part 22a) of the hub-side cylindrical surface part 76 to the axially outboard end edge is smaller than a length L₂ with respect to the axial direction from the edge part 22a to the axially outboard end edge (front end edge) of the non-contact seal lip 47a (L₁ < L₂).

In the case of the sixth embodiment, the axial-direction length L₁ of the hub-side cylindrical surface part 76 is regulated as described below. That is, the axial-direction length L₁ of the hub-side cylindrical surface part 76 is regulated such that the volume of an imaginary space Y₁ which is formed of an outer-diameter-side half part of a torus shape (doughnut shape) having a cross-sectional diameter L₁ as indicated by a chain line X₁ in FIG. 11 is greater than the total amount (volume) of grease that is filled in a first grease space 77 which is partitioned by the inside seal lip 39b and the middle seal lip 40b and grease that is filled in a second grease space 78 which is partitioned by the middle seal lip 40b and the outside seal lip 41c.

Next, the reason for forming the hub-side cylindrical surface part 76 having the configuration as described above on the wheel-supporting rolling bearing unit If of the sixth embodiment is described.

When grease is leaked from the first grease space 77 and the second grease space 78 at the time of use, the grease as is of a small amount is not scattered from the edge part 22a but is scattered from the edge part 22a after being temporarily accumulated at the edge part 22a and being agglomerated to a certain size. When the hub 3c is rotated, the agglomerated grease is not easily flowed toward the outer circumferential surface of the hub-side cylindrical surface part 76 by the working of a surface tension of the grease at the edge part 22a. On the other hand, when the rotation of the hub 3c is stopped, the agglomerated grease is easily flowed beyond the edge part 22a to the outer circumferential surface of the hub-side cylindrical surface part 76. Such a phenomenon occurs dominantly at an upper position of the edge part 22a in the assembled state. Then, when the grease that adheres to the outer circumferential surface of the hub-side cylindrical surface part 76 is increased to reach to the axially inboard end edge (a region that is adjacent to the axially outboard of the hub-side cylindrical surface part 76) of the axially inboard surface of the continuation part 21b of the hub main body 7c, the grease adhering to the continuation part 21b is easily leaked to the outside via the axially inboard surface of the thin wall part 20a and the continuation part 21b when the hub 3c starts rotating. Therefore, in the case of the sixth embodiment, the axial-direction length L₁ of the hub-side cylindrical surface part 76 is regulated as described above, and thereby, when grease adheres to the outer circumferential surface of the hub-side cylindrical surface part 76, the grease does not easily arrive at the axially inboard end edge (the region that is adjacent to the axially outboard of the hub-side cylindrical surface part 76) of the continuation part 21b of the hub main body 7c.

In the case of the sixth embodiment, the axially outboard end edge of the hub-side cylindrical surface part 76 is arranged at an axially more inboard position in the axial direction than the axially outboard end edge (front end edge) of the non-contact seal lip 47a, and therefore, even when the grease adhering to the outer circumferential surface of the hub-side cylindrical surface part 76 is scattered, it is possible to prevent the grease from being externally scattered by the non-contact seal lip 47a. Other configurations, operations, and advantages are similar to the case of the first embodiment described above.

### [Seventh Embodiment]

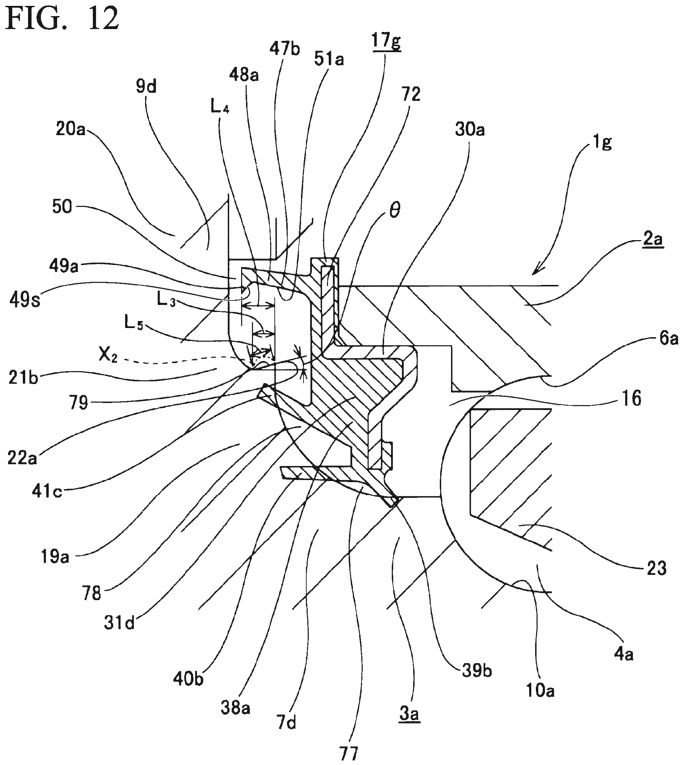

A seventh embodiment of the present invention is described with reference to FIG. 12. A non-contact seal lip 47b of a seal material 31d that constitutes a seal device 17g included in a wheel-supporting rolling bearing unit 1g of the seventh embodiment is a member that corresponds to a seal lip (scatter prevention seal lip) which includes a scatter prevention function. The non-contact seal lip 47b is formed of a tube part 48a and an inward-direction protrusion part 49a.

The tube part 48a is formed in a state of extending axially outward and radially outward from a part close to the radially outer end of a region, which covers the axially outboard surface of the outer-diameter-side circular ring-shaped part 72 of the metal insert 30a, of the seal base part 38a.

The inward-direction protrusion part 49a is formed on the axially outboard end part of the inner circumferential surface of the tube part 48a in a state of protruding radially inward from the inner circumferential surface of the tube part 48a throughout the entire circumference. The inward-direction protrusion part 49a is formed in a substantially triangular cross-sectional shape in which the thickness with respect to the axial direction is smaller toward the radially more inside direction.

The non-contact seal lip 47b having the configuration as described above is provided in a state where the front end edge (axially outboard end edge) of the non-contact seal lip 47b has a slight gap in the axial direction with (closely faces) a part close to the radially inner end of the axially inboard surface of the thin wall part 20a that constitutes a rotational-side flange 9d. In this way, a labyrinth seal 50 is formed between the front end edge of the non-contact seal lip 47b and the axially inboard surface of the thin wall part 20a.

A part that is surrounded from three directions by the inner circumferential surface of the tube part 48a, a region, which is adjacent to the axially inboard end portion of the tube part 48a, of the axially outboard surface of the seal base part 38a, and the axially inboard surface of the inward-direction protrusion part 49a is a grease reservoir part 51a. It is preferable that the grease reservoir part 51a have a volume that is capable of accommodating the total amount (volume) of grease that is filled in a first grease space 77 which is partitioned by the middle seal lip 40b and the inside seal lip 39b of the seal material 31d that constitutes the seal device 17g and grease that is filled in a second grease space 78 which is partitioned by the middle seal lip 40b and the outside seal lip 41c. The rest of structures of the seal device 17g are similar to the structures of the seal device 17f of the sixth embodiment described above.

In the seventh embodiment, the rotational-side flange (flange) 9d has a ridge part (edge part) 22a that scatters grease radially outward by a centrifugal force in a use state. The seal device 17g has the outside seal lip (leak prevention seal lip, first seal lip) 41c that seals the opening part of the internal space (space) 16 between the outer ring 2a and the hub 3a and the non-contact seal lip (scatter prevention seal lip, second seal lip) 47b in which at least part of the non-contact seal lip 47b is arranged at a radially more outer position than the ridge part 22a, and at least part of the non-contact seal lip 47b is arranged to be radially overlapped with the ridge part 22a. The non-contact seal lip 47b has an inner circumferential surface 49s that is arranged, in the axial direction, between a front end part (axially outboard end part) and an overlapping position that radially overlaps with the ridge part 22a and that is arranged radially more inside at a farther position from the outer ring 2a.

In the case of the seventh embodiment, a hub-side conical surface part 79 having a partially conical surface shape of which the generatrix shape is a straight line shape that is slanted in the radially more outside direction toward the axially more inside direction is provided on one part (a part, which is adjacent to the axially outside of the edge part 22a, of the outer circumferential surface of the axially inboard end part of the thick wall part (first part) 19a) between the edge part 22a and the radially inner end edge of the axially inboard surface of the continuation part 21b that constitutes a hub main body 7d. The hub-side conical surface part 79 is formed by applying a lathe turning process to the above-described one part. In the case of the seventh embodiment, the axially outboard end edge of the hub-side conical surface part 79 is arranged at an axially more inboard position than the axially outboard end edge (front end edge) of the non-contact seal lip 47b. That is, a length (axial-direction length of the hub-side conical surface part 79) L₃ from the axially inboard end edge (edge part 22a) of the hub-side conical surface part 79 to the axially outboard end edge is smaller than a length L₄ with respect to the axial direction from the edge part 22a to the axially outboard end edge (front end edge) of the non-contact seal lip 47b (L₃ < L₄).

In the case of the seventh embodiment, a generatrix length L₅ of the hub-side conical surface part 79 is regulated as described below. That is, the generatrix length L₅ of the hub-side cylindrical surface part 76 is regulated such that at least the volume of an imaginary space Y₂ which is formed of an outer-diameter-side half part (a radially more outside part than the hub-side conical surface part 79) of a torus shape (doughnut shape) having a cross-sectional diameter L₅ as indicated by a chain line X₂ in FIG. 12 is greater than the total amount (volume) of grease that is provided in a first grease space 77 and grease that is provided in a second grease space 78. A slant angle θ of the generatrix of the hub-side conical surface part 79 with respect to the center axis of the hub main body 7d is in a relation of L₃ = L₅·cosθ. The slant angle θ of the generatrix of the hub-side conical surface part 79 can be appropriately determined.

The reason why the hub-side conical surface part 79 having the configuration as described above is formed on the wheel-supporting rolling bearing unit 1g of the seventh embodiment as described above is similar to the reason why the hub-side cylindrical surface part 76 is formed on the wheel-supporting rolling bearing unit If of the sixth embodiment described above.

Specifically, in the case of the seventh embodiment, the hub-side conical surface part 79 is formed in a partially conical surface shape in which the outer diameter is greater toward the axially more inboard direction, and therefore, the grease adhering to the outer circumferential surface of the hub-side conical surface part 79 can be easily moved by a centrifugal force to the edge part 22a side. As a result, it is possible to prevent the grease from being moved to the continuation part 21b side of the hub main body 7d and being leaked to the outside via the axially inboard surface of the thin wall part (second part) 20a and the continuation surface 21b.

Also in the case of the seventh embodiment, the axially outboard end edge of the hub-side conical surface part 79 is arranged at an axially more inboard position than the axially outboard end edge (front end edge) of the non-contact seal lip 47b, and therefore, even when the grease adhering to the outer circumferential surface of the hub-side conical surface part 79 is scattered, it is possible to prevent the grease from being externally scattered by the grease reservoir part 51a that is formed on the inner circumferential surface of the non-contact seal lip 47b. Other configurations, operations, and advantages are similar to the first embodiment described above.

The rotational-side flange that includes the thin wall part and the thick wall part can be formed of a member of one body as described in the first to fourth embodiments or can be formed by combining members (flange main body, slide collar) that are provided as a separate body as described in the fifth embodiment.

Further, with respect to the structure of the seal device, the structure (position, shape, number, and the like) of the seal lip other than the seal lip (leak prevention seal lip) which includes a leak prevention function and the seal lip (scatter prevention seal lip) which includes a scatter prevention function is not specifically limited. Also with respect to the seal lip which includes a leak prevention function and the seal lip which includes a scatter prevention function, the structures of the seal lips are not limited to the structures of the above-described embodiments, and an appropriate structure can be adopted for the structures of the seal lips.

Further, it is possible to form the seal lip which includes a leak prevention function and the seal lip which includes a scatter prevention function as a separate seal lip as described in the first and second embodiments. On the other hand, it is possible to form the seal lip which includes a leak prevention function and the seal lip which includes a scatter prevention function as an identical seal lip as described in the third to fifth embodiments. Further, it is possible to provide a plurality of seal lips which include a leak prevention function, and it is possible to provide a plurality of seal lips which include a scatter prevention function.

A wheel-supporting rolling bearing unit according to an embodiment includes an outer ring, a hub, a plurality of rolling elements, and a seal device.

The outer ring has an outer raceway on an inner circumferential surface. The outer ring is supported by a suspension and is not rotated in a use state.

The hub has an inner raceway on an outer circumferential surface and is arranged on an inner side of the outer ring concentrically with the outer ring. A rotational-side flange used for supporting a wheel is formed on the hub at a part, which protrudes axially more outward than an axially outboard end part of the outer ring, of the outer circumferential surface.

The plurality of rolling elements are provided to be capable of rolling between the outer raceway and the inner raceway.

The seal device is provided in a state of sealing an axially outboard end opening part of an internal space that is present between the inner circumferential surface of the outer ring and the outer circumferential surface of the hub in a state where the seal device is supported by and fixed to an axially outboard end part of the outer ring.

The rotational-side flange has a thick wall part that is formed on a radially inner side and a thin wall part that is formed on a radially more outer side than the thick wall part. An axially inboard surface of the thick wall part is arranged at an axially more inboard position than an axially inboard surface of the thin wall part.

The seal device includes, as a separate or identical seal lip: a seal lip which includes a leak prevention function and of which a front end part is in slidable contact with an axially inboard surface of the rotational-side flange in a state of having an interference throughout an entire circumference; and a seal lip of which an axially middle part is present at a radially more outer position than an indifferentiable part that is present between the axially inboard surface of the thick wall part and the axially inboard surface of the thin wall part and in a state where the axially middle part of the seal lip is radially overlapped with the indifferentiable part and which thereby includes a scatter prevention function for preventing grease that is encapsulated in the internal space from being scattered to an external space.

In the above embodiment, additionally, the seal device can be formed of an inside seal ring and an outside seal ring that is provided more outside with respect to the radial direction than the inside seal ring.

When such a configuration is adopted, specifically, a configuration can be adopted in which a seal lip that includes a leak prevention function is provided on the inside seal ring. Then, a configuration can be adopted in which a front end part of the seal lip that includes a leak prevention function is in slidable contact with an axially inboard surface of the thick wall part in a state of having an interference throughout an entire circumference.

Further, in addition to adopting such a configuration, a configuration can be adopted in which a seal lip that includes a scatter prevention function is provided on the outside seal ring, and a front end part of the seal lip that includes a scatter prevention function closely faces a part, which is arranged at a more outward position with respect to the radial direction than the indifferentiable part, of the axially inboard surface of the rotational-side flange.

In the above embodiment, additionally, the seal lip that includes a scatter prevention function can be formed of an outside seal lip that is provided on the outside seal ring and an inside seal lip that is provided at a radially more inward position than the outside seal lip of the outside seal ring.

When such a configuration is adopted, specifically, a configuration can be adopted in which a front end part of the outside seal lip and a front end part of the inside seal lip closely face a part, which is arranged at a more outward position with respect to the radial direction than the indifferentiable part, of the axially inboard surface of the rotational-side flange.

In the above embodiment, additionally, a configuration can be adopted in which one side lip which is the seal lip that includes a leak prevention function and which is also the seal lip that includes a scatter prevention function is provided.

When such a configuration is adopted, specifically, a configuration can be adopted in which an axially middle part of the side lip is radially overlapped with the indifferentiable part.

When such a configuration is adopted, specifically, a configuration can be adopted in which a front end part of the side lip is in slidable contact with a part, which is arranged at a more outward position with respect to the radial direction than the indifferentiable part, of the axially inboard surface of the rotational-side flange in a state of having an interference throughout the entire circumference.

In the above embodiment, additionally, the rotational-side flange can be formed of a flange main body and an annular member that is provided on an axially inboard surface of a base end part of the flange main body.

When such a configuration is adopted, specifically, the thick wall part can be formed of the annular member and the base end part of the flange main body. The thin wall part can be formed of a part, which is arranged at a radially more outward position than the annular member, of the flange main body.

Further, the indifferentiable part can be formed of a radially outer end part of the annular member.

In the above embodiment, the seal device (seal ring) that seals the axially outboard end opening part of the internal space that is present between the inner circumferential surface of the outer ring and the outer circumferential surface of the hub includes, as a separate or identical seal lip: a seal lip which includes a leak prevention function and of which the front end part is in slidable contact with the axially inboard surface of the rotational-side flange in a state of having an interference throughout the entire circumference; and a seal lip of which the axially middle part is present at a radially more outer position than the indifferentiable part that is present between the axially inboard surface of the thick wall part and the axially inboard surface of the thin wall part and in a state where the axially middle part of the seal lip is radially overlapped with the indifferentiable part and which thereby includes a scatter prevention function for preventing grease that is encapsulated in the internal space from being scattered. Therefore, it is possible to effectively prevent the grease from being leaked from the seal device which seals the axially outboard end opening part of the space in which the rolling element is arranged and adhering to the rotor which constitutes the disk brake.

### [Example]

Hereinafter, Example of the present invention is described; however, the present invention is not limited to Example.

### <Test Condition>

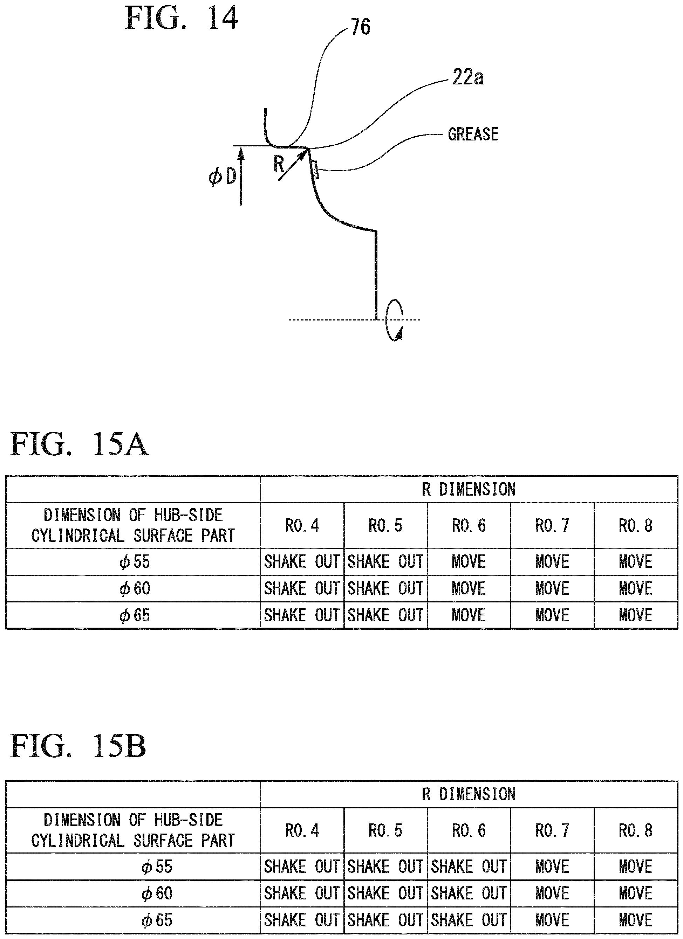

FIG. 14 is a view showing a test sample of Example. The cross-sectional shape of the edge part (ridge part) 22a of the test sample was a right angle, and a R surface was provided on the edge part 22a. Samples having the same shape as the hub main body 7c shown in FIG. 11 were fabricated using a R dimension of the edge part 22a and a diameter D of the hub-side cylindrical surface part 76 as a parameter.

Grease of the same amount as grease applied to the outside seal lip 41c was applied to the position where the outside seal lip 41c was in contact with (in slidable contact with) the axially inboard surface of the hub main body 7c. The applied grease was wheel grease of a mineral oil - diurea system of penetration grade 2. The applied grease was grease widely used for the wheel-bearing unit as the grease enveloped in the internal space 16.

The hub main body 7c to which the grease was applied was rotated at a predetermined rotation speed for 24 hours. Then, it was observed whether the grease was shaken out at the edge part 22a (the grease was scattered from the edge part 22a) or the grease was moved to the hub-side cylindrical surface part 76. Rotation speeds corresponding to vehicle speeds of 100 km/h, 120 km/h, and 140 km/h were examined as the rotation speed of the sample.

### <Test Result>

At the rotation speed corresponding to the vehicle speed of 100km/h, the moved amount of the grease of all samples was little, and the grease did not arrive at the edge part 22a. That is, the grease was moved little.

At the rotation speed corresponding to the vehicle speed of 120 km/h, a test result shown in FIG. 15A was obtained.

At the rotation speed corresponding to the vehicle speed of 140 km/h, a test result shown in FIG. 15B was obtained.

In the case of a hub main body 7c having a large diameter D of the hub-side cylindrical surface part 76, that is, a wheel-bearing unit assembled to a relatively large vehicle, the diameter of an attached tire is large, and therefore, the rotation speed of the hub main body 7c is low. On the other hand, since a wheel-bearing unit having a small diameter D of the hub-side cylindrical surface part 76 is assembled to a relatively small vehicle, the diameter of an attached tire is small, and the rotation speed of the hub main body 7c is high. In this way, even when the vehicle speeds are the same, the rotation speed of the hub main body 7c is changed depending on the diameter of the attached tire, and therefore, the correlation between the diameter D of the hub-side cylindrical surface part 76 and a centrifugal force (shake out or move) that works on the grease is weak.

From the test results of FIG. 15A and FIG. 15B, it was found that whether the grease was shaken out at the edge part 22a or the grease was moved to the hub-side cylindrical surface part 76 depended on the R size of the edge part 22a.

It was found that the grease was not moved when the rotation speed was low, and the grease was easily shaken out when the rotation speed was high. It was found that the R dimension of the edge part 22a at which it was possible to shake out the grease at a minimum rotation speed at which the grease was moved was 0.5 mm.

The numerical value described above is an example, and the numerical value is not limited to the above-described one. The R dimension of the edge part 22a can be changed in accordance with a condition. Alternatively, the edge part 22a can have a shape having substantially no R surface.

### [Industrial Applicability]

According to the vehicle wheel bearing described above, it is possible to prevent grease from being leaked from a seal device which seals an axially outboard end opening part of a space in which a rolling element is arranged and adhering to a rotor which constitutes a disk brake.

### DESCRIPTION OF THE REFERENCE SYMBOLS

1, 1a, 1b, 1c, 1d, 1e, 1f, 1g: wheel-supporting rolling bearing unit
2, 2a, 2b, 2c: outer ring
3, 3a, 3b, 3c, 3d: hub
4, 4a: rolling element
5: stationary-side flange
6a, 6b: outer raceway
7, 7a, 7b, 7c, 7d: hub main body
8: inner ring
9, 9a, 9b, 9c, 9d: rotational-side flange
10a, 10b: inner raceway
11: small diameter step part
12: spline hole
13: constant velcity joint outer race
14: spline shaft
15: nut
16: internal space
17, 17a, 17b, 17c, 17d, 17e, 17f, 17g: seal device (seal ring)
18: combination seal ring
19, 19a, 19b: thick wall part (first part)
20, 20a, 20b: thin wall part (second part)
21, 21a, 21b: continuation part
22, 22a: edge part (ridge part)
23: retainer
24: through-hole
25: stud
26: outside circumferential-direction step part
27, 27a: inside circumferential-direction step part
28: inside seal ring
29, 29a: outside seal ring
30, 30a: metal insert
31, 31a, 31b, 31c, 31d: seal material
32, 32a: fitting cylinder part
33: circular ring-shaped part
34: outside conical cylinder part
35: outside circular ring part
36: inside conical cylinder part
37: inside circular ring part
38, 38a: seal base part
39, 39a, 39b: inside seal lip
40, 40a, 40b: middle seal lip
41, 41a, 41b, 41c: outside seal lip
42: outside metal insert
43, 43a: outside seal material
44: outside fitting cylinder part
45: outside circular ring part
46: outside seal base part
47, 47a, 47b: non-contact seal lip
48, 48a: tube part
49, 49a: inward-direction protrusion part
50, 50a: labyrinth seal
51, 51a: grease reservoir part
52: first non-contact seal lip
53: second non-contact seal lip
54: first labyrinth seal
55: first dent cylindrical surface part
56: second dent cylindrical surface part
57: circular tube part
58: conical tube part
59: second labyrinth seal
60: grease reservoir part
61: circular tube part
62: first conical tube part
63: second conical tube part
64: grease reservoir part
65: flange main body
66: slide collar
67: fitting circular tube part
68: outward-direction flange part
69: folded part
70: discontinuity part
71: inner-diameter-side circular ring-shaped part
72: outer-diameter-side circular ring-shaped part
73: first circular ring-shaped part
74: conical part
75: second circular ring-shaped part
76: hub-side cylindrical surface part
77: first grease space
78: second grease space
79: hub-side conical surface part

## Claims

1. A vehicle wheel-bearing unit, comprising:
an outer ring that has outer raceways on an inner circumferential surface;
a hub which has inner raceways on an outer circumferential surface, which is arranged on an inner side of the outer ring concentrically with the outer ring, and on which a rotational-side flange used for supporting a wheel is formed at a part, which protrudes axially more outward than an axially outboard end part of the outer ring, of the outer circumferential surface;
a plurality of rolling elements that are provided to be capable of rolling between the outer raceways and the inner raceways; and
a seal device that seals an axially outboard end opening part of an internal space that is present between the inner circumferential surface of the outer ring and the outer circumferential surface of the hub in a state where the seal device is supported by and fixed to an axially outboard end part of the outer ring, wherein:
the rotational-side flange has a thick wall part that is formed on a radially inner side and a thin wall part that is formed on a radially more outer side than the thick wall part, and an axially inboard surface of the thick wall part is arranged at an axially more inboard position than an axially inboard surface of the thin wall part;
the seal device includes, as a separate or identical seal lip, a leak prevention seal lip for preventing grease which is enveloped in the internal space from being leaked from the internal space and a scatter prevention seal lip for preventing grease which is enveloped in the internal space from being scattered to an external space;
a front end part of the leak prevention seal lip is in slidable contact with an axially inboard surface of the rotational-side flange in a state of having an interference throughout an entire circumference; and
an axially middle part of the scatter prevention seal lip is provided at a radially more outer position than an indifferentiable part that is present between the axially inboard surface of the thick wall part and the axially inboard surface of the thin wall part and in a state where the axially middle part of the scatter prevention seal lip is radially overlapped with the indifferentiable part.

2. The vehicle wheel-bearing unit according to Claim 1, wherein:
the seal device includes an inside seal ring and an outside seal ring that is provided more outside with respect to a radial direction than the inside seal ring;
the leak prevention seal lip is provided on the inside seal ring, and the front end part of the leak prevention seal lip is in slidable contact with the axially inboard surface of the thick wall part in a state of having an interference throughout an entire circumference; and
the scatter prevention seal lip is provided on the outside seal ring, and a front end part of the scatter prevention seal lip is provided in a state of closely facing a part, which is arranged at a more outward position with respect to a radial direction than the indifferentiable part, of the axially inboard surface of the rotational-side flange.

3. The vehicle wheel-bearing unit according to Claim 2, wherein
the scatter prevention seal lip includes an outside seal lip that is provided on the outside seal ring and an inside seal lip that is provided at a more inward position with respect to a radial direction than the outside seal lip of the outside seal ring, and
a front end part of the outside seal lip and a front end part of the inside seal lip closely face a part, which is arranged at a more outward position with respect to a radial direction than the indifferentiable part, of the axially inboard surface of the rotational-side flange.

4. The vehicle wheel-bearing unit according to Claim 1, comprising
one side lip which is the leak prevention seal lip and which is also the scatter prevention seal lip, wherein
an axially middle part of the side lip is radially overlapped with the indifferentiable part, and
a front end part of the side lip is in slidable contact with a part, which is arranged at a more outward position with respect to a radial direction than the indifferentiable part, of the axially inboard surface of the rotational-side flange in a state of having an interference throughout an entire circumference.

5. The vehicle wheel-bearing unit according to Claim 1, wherein:
the rotational-side flange includes a flange main body and an annular member that is provided on an axially inboard surface of a base end part of the flange main body, the thick wall part is formed of the annular member and the base end part of the flange main body, and the thin wall part is formed of a part, which is arranged at a radially more outward position than the annular member, of the flange main body; and
the indifferentiable part is formed of a radially outer end part of the annular member.

6. A vehicle wheel-bearing unit, comprising:
an outer ring having outer raceways;
a hub having inner raceways and a flange;
a plurality of rolling elements that are arranged between the outer raceways and the inner raceways; and
a seal device, wherein
the flange has a ridge part that is provided such that grease is scattered from the ridge part by a centrifugal force in a use state, and
the seal device has a first seal lip that seals an opening part of a space between the outer ring and the hub and a second seal lip in which at least part of the second seal lip is arranged at a radially more outer position than the ridge part and at least part of the second seal lip is arranged to be radially overlapped with the ridge part.

7. The vehicle wheel-bearing unit according to Claim 6, wherein
the second seal lip has at least one of (a) an inner circumferential surface that is arranged between a front end part and an overlapping position that axially overlaps with the ridge part and that is substantially parallel with the axial direction, (b) an inner circumferential surface that is arranged between a front end part and an overlapping position that axially overlaps with the ridge part and that is arranged radially more inside at a farther position from the outer ring, and (c) a front end part that is in slidable contact with a side surface of the hub at a radially more outer position than the ridge part.

8. A vehicle wheel-bearing unit, comprising:
an outer ring having outer raceways;
a hub having inner raceways and a flange;
a plurality of rolling elements that are arranged between the outer raceways and the inner raceways; and
a seal device, wherein
the flange has a first part, a second part that is arranged at a radially more outer position than the first part, and a ridge part that is arranged between the first part and the second part,
the seal device has a first seal lip that seals an opening part of a space between the outer ring and the hub and a second seal lip in which at least part of the second seal lip is arranged at a radially more outer position than the ridge part and at least part of the second seal lip is arranged to be radially overlapped with the ridge part, and
the second seal lip has at least one of (a) an inner circumferential surface that is arranged between a front end part and an overlapping position that axially overlaps with the ridge part and that is substantially parallel with the axial direction, (b) an inner circumferential surface that is arranged between a front end part and an overlapping position that axially overlaps with the ridge part and that is arranged radially more inside at a farther position from the outer ring, and (c) a front end part that is in slidable contact with the second part of the hub.
